# EUROPEAN PATENT SPECIFICATION

(11) **EP 2 216 719 B1**
(45) Date of publication and mention of the grant of the patent: **02.05.2012**
(21) Application number: 09155229.9
(22) Date of filing: 16.03.2009
(51) Int. Cl.: G06F 11/14

(54) **Mobile electronic apparatus and data management method in mobile electronic apparatus**
Mobile elektronische Vorrichtung und Datenverwaltungsverfahren in einer mobilen elektronischen Vorrichtung
Appareil électronique mobile et procédé de gestion des données dans un appareil électronique mobile

(30) Priority: 09.02.2009 JP 2009027774
(43) Date of publication of application: 11.08.2010
(73) Proprietor: Kabushiki Kaisha Toshiba, Minato-ku Tokyo 105-8001 (JP)
(72) Inventor: Sekiya, Satoshi, Tokyo 105-8001 (JP)
(74) Representative: HOFFMANN EITLE

(56) References cited:
- JP-A- 2007 084 187
- US-B1- 6 970 890

## Description

The present invention relates to a mobile electronic apparatus such as an IC card or an IC tag, in which an IC chip having stored therein personal information or transaction information is incorporated, and to a data management method used in the mobile electronic apparatus.

In recent years, a mobile electronic apparatus such as an IC card has been used for a great range of applications. In such an IC card, various data such as personal information or money transaction information depending on applications are stored. The data described above are generally written in a nonvolatile memory such as an EEPROM or a flash ROM included in an IC card. The IC card is configured to execute a data writing process or the like to the nonvolatile memory according to a command from an external apparatus.

In a general contact-type or non-contact type IC card, data is handled in a format regulated in ISO/IEC 7816-4 which is an international standard. In ISO/IEC 7816-4, data is recorded in a file called ELEMENTARY FILE (EF) defined on a nonvolatile memory in the IC card. In ISO/IEC 7816-4, EFs of various formats are regulated. Of the EFs regulated by ISO/IEC7816-4, an EF of a record format is generally used. In ISO/IEC 7816-4, as EFs of record formats, the following formats of three types are regulated.
(1) Fixed-length sequential record file
(2) Variable-length sequential record file
(3) Fixed-length circulation sequential record file

In an EF of the fixed-length sequential record file or the variable-length sequential record file, a recording place (area) for one data is fixed by a file ID and a record number. Therefore, when data reading, data writing, or data rewriting are to be performed to the EF of the fixed-length sequential record file or the variable-length sequential record file, writing, rewriting, and the like are performed to an area designated by a designated file ID and a record number.

On the other hand, the fixed-length circulation sequential record file has a configuration in which data are sequentially rerecorded. In the fixed-length circulation sequential record file, in general, a record number is added to data each time data is rerecorded. More specifically, in the fixed-length circulation sequential record file, record numbers are allocated to a plurality of data sequentially accumulated in a reverse chronological order (or chronological order).

In a conventional IC card, like transaction history information, data added each time a transaction process is performed is stored in a fixed-length circulation sequential record file. Other data are generally stored in a fixed-length or variable-length sequential record file.

However, depending on operation modes of IC cards, a plurality of data are requested to be stored in a plurality of records managed by record numbers in an EF, and data before updating is requested to be referred to after data of a certain record is updated (rewritten).

In order to realize the requests, in a conventional IC card, fixed-length circulation sequential record files must be formed or managed in units of data. In this case, usability is poorer than that of record management in the same EF. In a general operation mode, a large number of EFs in IC cards cannot be added or deleted after an issuing process. In such an IC card, it is difficult to realize the data management described above after the issuing process.

Furthermore, in the compact electronic apparatus such as the IC card, a memory capacity is limited. When a memory area is restricted, as a memory area to perform the above record management, a large area cannot be easily secured. For this reason, in the compact electronic apparatus such as the IC card, a memory area used for record management is desired to be efficiently secured.

JP2007/084187 A describes a software updating arrangement for an elevator control apparatus, in which a software update is supplied via a detachable USB memory. Before the current software of the elevator control apparatus is updated, the current software is backed up to the detachable USB memory. Subsequently, the software update is written from the USB memory to the elevator control apparatus, thus replacing the previously stored software in the elevator control apparatus.

US 6,970,890 B1 describes a method and an apparatus for data recovery. The document teaches to write a data update to a recovery block first and then to a targeted file structure. In case the writing to the targeted file structure fails, the data stored in the recovery block can be used to create the intended state of the updated targeted film structure.

An object of the present invention which is defined in detail in the appended independent claims 1 and 14 is to provide a mobile electronic apparatus which can efficiently use a memory area, and a data management method used in the mobile electronic apparatus.

According to an aspect of the present invention, there is provided a mobile electronic apparatus which performs a process according to a command given by an external apparatus, comprising: a storage unit which stores a record file which stores a plurality of record data; a data saving process unit which stores record data before rewriting of the record data requested to be rewritten in the record file as backup data, in the case where a command requesting the record data in the record file to be rewritten is given from the external apparatus; and a rewriting process unit which rewrites the record data according to the command, after the record data before rewriting is stored as backup data by the data saving process unit.

According to an aspect of the present invention, there is provided a data management method in a mobile electronic apparatus, comprising: storing record file which stores a plurality of record data in a storage unit; storing record data before rewriting of the record data requested to be rewritten in the storage unit as backup data, in the case where a command which requests the record data in the record file to be rewritten is given from an external apparatus; and rewriting the record data according to the command, after the record data before rewriting is stored as backup data.

The invention can be more fully understood from the following detailed description when taken in conjunction with the accompanying drawings, in which:
FIG. 1 is a block diagram showing a configuration of an IC card according to the embodiment and a system including the IC card;
FIG. 2 is a diagram showing an entire configuration of a non-contact-type IC card;
FIG. 3 is a diagram showing a first configuration of a record file;

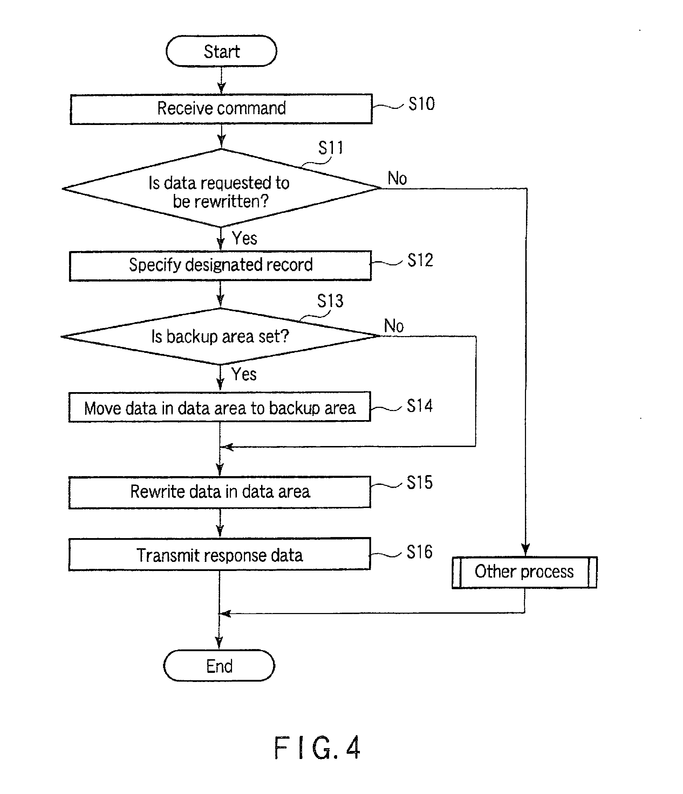

FIG. 4 is a flow chart for explaining an example of a data rewriting process to the record file of the first configuration;
FIG. 5 is a flow chart for explaining an example of a data reading process to the record file of the first configuration;
FIG. 6 is a diagram showing a second configuration of a record file;
FIG. 7 is a flow chart for explaining an example of a data rewriting process to the record file of the second configuration;
FIG. 8 is a flow chart for explaining an example of a data reading process to the record file of the second configuration;
FIG. 9 is a diagram showing a third configuration of a record file;
FIG. 10 is a flow chart for explaining an example of a data rewriting process to the record file of the third configuration;
FIG. 11 is a flow chart for explaining an example of a data reading process to the record file of the third configuration;
FIG. 12 is a diagram showing a fourth configuration of a record file;
FIG. 13 is a flow chart for explaining an example of a data rewriting process to the record file of the fourth configuration;
FIG. 14 is a flow chart for explaining an example of a data reading process to the record file of the fourth configuration;
FIG. 15 is a diagram showing a fifth configuration of a record file;
FIG. 16 is a flow chart for explaining an example of a data rewriting process to the record file of the fifth configuration;
FIG. 17 is a flow chart for explaining an example of a data reading process to the record file of the fifth configuration; and
FIG. 18 is a diagram showing a sixth configuration of a record file.

Embodiments according to the present invention will be described below with reference to the accompanying drawings.

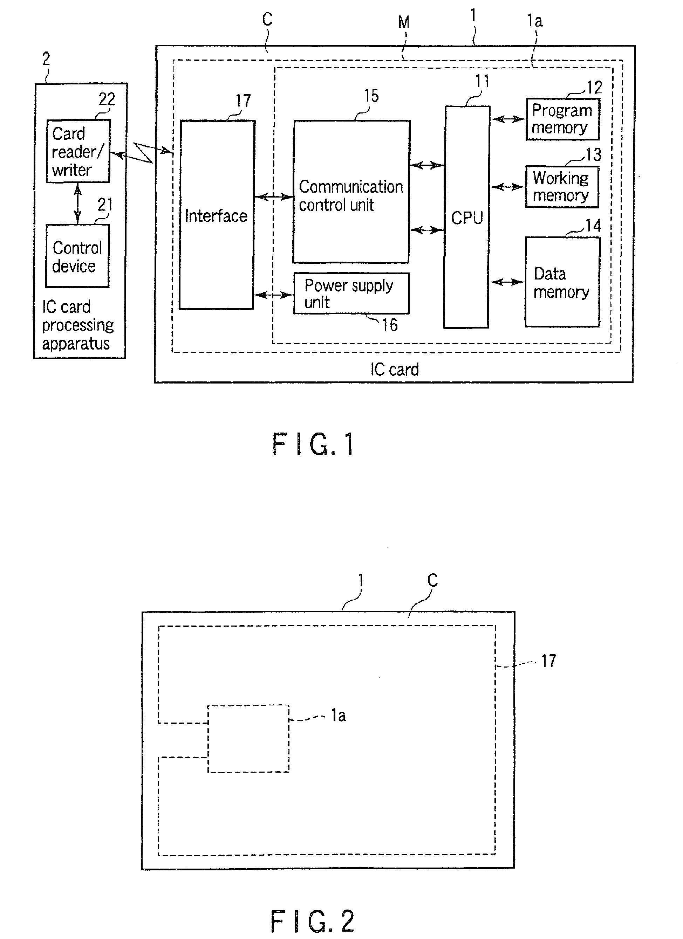

FIG. 1 is a block diagram showing a configuration of an IC card 1 serving as a mobile electronic apparatus according to an embodiment of the present invention and an IC card system including the IC card 1.

The IC card 1 is set in an operable state by power supply from an IC card processing apparatus 2 serving as an external apparatus. The operable IC card 1 performs various processes depending on commands from the IC card processing apparatus 2. The IC card processing apparatus 2 supplies a power supply voltage to operate the IC card 1 and supplies a command which requests various processes to the IC card 1. A command supplied to the 1C card 1 from the IC card processing apparatus 2 requests a process depending on an application or an operation mode.

The IC card 1 may be a non-contact-type mobile electronic apparatus (non-contact-type IC card) which performs radio communication in a non-contact state with the IC card processing apparatus 2 by an antenna, a radio communication unit, or the like or may be a contact-type mobile electronic apparatus (contact-type IC card) which communicates with the IC card processing apparatus 2 while in physical contact therewith. Furthermore, the IC card 1 may be a composite IC card (dual interface IC card) having a communication function serving as a non-contact-type IC card and a communication function serving as a contact-type IC card. In this embodiment, a non-contact-type IC card is mainly supposed and described. The non-contact-type IC card and the contact-type IC card are different from each other only in a communication scheme or the like with the IC card processing apparatus 2. For this reason, the embodiment described below can also be applied to a contact-type IC card.

A configuration of the IC card 1 will be described below.

As shown in FIG. 1, the IC card 1 has a CPU 11, a program memory 12, a working memory 13, a data memory 14, a communication control unit 15, a power supply unit 16, an interface (antenna or contact unit) 17, and the like.

The IC card 1 is configured by a card-like body C. In the card-like body C which forms the IC card 1, one (or a plurality of) IC chip la and an interface 17 are embedded. The IC chip la includes the CPU 11, the program memory 12, the working memory 13, the data memory 14, the communication control unit 15, the power supply unit 16, and the like. The IC chip la is connected to the interface 17 to make a module. The module is embedded in the card-like body C constituting the Inc card 1. For example, FIG. 2 is a diagram showing an entire configuration of a non-contact-type IC card. The non-contact-type IC card shown in FIG. 2 has a card-like body C. In the card-like body C, as indicated by a dotted line in FIG. 2, a module M having one (or a plurality of) IC chip la and an antenna serving as the interface 17 are embedded.

The CPU 11 entirely controls the IC card 1. The CPU 11 operates on the basis of a control program and control data stored in the program memory 12 or the data memory 14. For example, the CPU 11 executes the control program which controls a basic operation stored in the program memory 12 to execute a process according to a command given by an external apparatus. In this manner, when a command which requests data to be written in the data memory 14 is given from the external apparatus, the CPU 11 executes a data writing process to the data memory 14. When a command which requests data stored in the data memory 14 to be read is given from the external apparatus, the CPU 11 executes a data reading process from the data memory 14. Furthermore, the CPU 11 executes a processing program installed according to an application or the like of the IC card 1 to execute a process according to the application.

The program memory 12 includes a read-only memory (ROM). In the program memory 12, a control program, control data, and the like which control a basic operation are stored in advance. In the program memory 12, a control program and control data according to specifications of the IC card 1 are stored in advance. For example, the CPU 11 executes a process according to a command externally given by the control program stored in the program memory 12.

The working memory 13 is configured by a nonvolatile memory (RAM; random access memory). The working memory 13 functions as a buffer memory which temporarily stores data. For example, in the working memory 13, data to be exchanged is temporarily stored in a communication process with the IC card processing apparatus (external apparatus) 2. The working memory 13 is also used as a memory which temporarily stores various write data or the like.

The data memory (nonvolatile memory) 14 is a nonvolatile memory in which data can be written. The data memory 14 is configured by, for example, an EEPROM, a flash memory, or the like. In the data memory 14, various pieces of information according to intended purposes are stored.

For example, an application (such as a processing program, operation data, or the like) according to an intended purposes of the IC card is written in the data memory 14. When the IC card 1 is used for a plurality of intended purposes, a plurality of applications according to the intended purposes are stored in the data memory 14. The applications according to the intended purposes of the IC card 1 are stored in files such as program files (DF; Dedicated file) and data files (EF; Elementary File) in units of the intended purposes defined on the data memory 14. Such a file structure is based on, for example, ISO/IEC 7816-4. A configuration of the data file (EF) to store various data will be described later in detail.

The communication control unit 15 is to control data communication with an external apparatus (for example, the IC card processing apparatus 2) through the interface 17. For example, when the IC card is a non-contact-type IC card, when the IC card receives data from the external apparatus, the communication control unit 15 demodulates transmission data serving as a radio wave received by the antenna serving as the interface 17 to supply the demodulated signal to the CPU 11. When data is transmitted to the external apparatus, the communication control unit 15 modulates data given from the CPU 11 and transmits the modulated data as a radio wave by the antenna serving as the interface 17. In the contact-type IC card, data communication with the external apparatus is performed through a contact portion which is physically and electrically in contact with a contact terminal of the external apparatus without the antenna serving as the interface 17.

The power supply unit 16 supplies an electric power and a clock pulse received trough the interface 17 to operate respective parts of the IC card 1. For example, when the IC card is an non-contact-type IC card, the power supply unit 16 generates an electric power and a clock pulse from a radio wave received by the antenna serving as the interface 17 to supply the electric power and the clock pulse to the parts in the IC card. When the CPU 11 is started by power supply from the power supply unit 16, the CPU 11 is configured to perform a process of resetting a processing state of the IC card 1. When the IC card 1 is the contact-type IC card, the power supply unit 16 is configured to supply the electric power and the clock pulse to the parts of the IC card by an electric power and a clock pulse directly supplied from an external apparatus through the interface 17.

The IC card processing apparatus 2 will be described below.

The IC card processing apparatus 2, as shown in FIG. 1, has a control device 21 and a card reader/writer 22. The control device 21 is configured by a personal computer (PC) or the like. The control device 21 is configured by an arithmetic processing unit such as a CPU, various memories such as a RAM, a ROM, a nonvolatile memory and a hard disk drive, and various interfaces such as a communication interface. In the control device 21, the arithmetic processing unit executes various control programs stored in the memories to realize various processes. The control device 21 is configured to exchange data with the card reader/writer 22 which performs data communication with the IC card 1.

For example, in the control device 21, control programs according to various processes using the IC card 1 are stored in advance. In the control device 21, the control programs are executed to execute various processes using the IC card 1. For example, in the various processes using the IC card 1, the control device 21 supplies a predetermined command by a predetermined procedure. The control device 21 is configured to perform various processes on the basis of responses (information representing a processing result or the like to a command) from the IC card 1 to the commands described-above.

The card reader/writer 22 functions as communication means which performs data communication with the IC card 1. The card reader/writer 22 is to perform data communication by a communication scheme according to the communication scheme of the IC card 1. More specifically, the control device 21 realizes data communication with the IC card 1 through the card reader/writer 22.

When the IC card 1 is a non-contact-type IC card, the card reader/writer 22 is configured by an antenna to perform radio data communication with the IC card 1, a communication control unit (modulation/demodulation circuit), and the like. When data is to be transmitted to the IC card 1, in the card reader/writer 22, the communication control unit modulates the transmitted data given from the control device 21 and transmits the modulated signal as a radio wave by the antenna. When the data is received from the non-contact-type IC card 1, in the card reader/writer 22, the communication control unit demodulates the signal received as a radio wave by the antenna, and the demodulated data is supplied to the control device 21 as received data. The card reader/writer 22 is configured to transmit and receive the data and to transmit a power supply to operate the IC card 1 and a radio wave serving as a clock pulse by the antenna.

When the IC card 1 is a contact-type IC card, the card reader/writer 22 is configured by a contact unit to be physically in contact with the IC card 1 to perform data communication, a control unit, and the like. When data is exchanged with the contact-type IC card, in the card reader/writer 22, the contact unit is brought into physical contact with the contact unit arranged on the IC card 1 to perform various data communications. The card reader/writer 22 is configured to supply an electric power and a clock pulse to the IC card 1 through the contact unit which is physically in contact with the IC card 1.

Files stored in the data memory 14 will be described below.

In the embodiment, as described above, the files in the data memory 14 have file structures regulated by ISO/IEC 7816. In ISO/IEC 7816, a file configuration having a hierarchical structure including an MF (Master File), a DF (Dedicated File), an EF (Elementary File), and the like is defined. The MF is a file located in an uppermost layer of the hierarchical structure, and the DF or the EF is arranged under the MF. The DF is a file set to each application. An EF serving as a data file to store data used in the application is set in the lower layer. Each of the EFs is a data file to store actual data. The actual data are stored in units of records in the data file. Record numbers are given to the records, respectively.

The above files are defined by pieces of defining information stored in a management table (not shown). For example, the EF serving as the data file described above, is defined by EF defining information stored in a management table (not shown). In the EF defining information, as information to specify the EF, a file ID, a start address in the data memory 14, a data size, and the like are defined.

The data file (EF) regulated by ISO/TEC 7816 has various formats. For example, in ISO/IEC 7816, as formats of the EF, a fixed-length sequential record file, a variable-length sequential record file, a fixed-length circulation sequential record file, and the like are given.

In the fixed-length sequential record file or the variable-length sequential record file, a plurality of record areas (to be simply referred to as records hereinafter) to store a plurality of data can be set. For example, when a plurality of data are desired to be stored in one file, the data are stored in the plurality of records corresponding to the plurality of data in a data file. In a file having a plurality of records, records are specified by file IDs and record numbers, respectively. For example, when data reading, data writing, or data rewriting is performed to a specific record of the fixed-length sequential record file or the variable-length sequential record file, the IC card processing apparatus 2 designates a record by a file ID and a record number in response to a command which requests writing, rewriting, reading, or the like.

In order to designate a record to be accessed, in various commands, a current record can also be designated. The current record is a record to set a current state. Information (record pointer) representing the current record is always stored in a working memory or the like and arbitrarily updated. For example, a record pointer is updated according to a command which designates a record number or a command which designates movement (for example, next or previous) of the current record. Therefore, when the command which designates a current record is received, the CPU 11 is configured to access the record (i.e., a current record) indicated by the record pointer.

In the fixed-length circulation sequential record file, data are sequentially rerecorded in record areas. In the fixed-length circulation sequential record file, in general, record numbers to the record areas in which the data are stored are replaced with other record numbers. More specifically, in the fixed-length circulation sequential record file, record numbers are allocated to the record areas of the plurality of sequentially accumulated data in a reverse chronological order (or chronological order).

A configuration of a sequential record file to be processed in the embodiment will be described below.

In the embodiment, it is assumed that backup data are stored in the records in the above sequential record file, respectively. More specifically, one backup data or a plurality of backup data are stored in each of the records in the sequential record file. A memory area to store the backup data can be set by various methods. Configurations of the record file will be described below.

A first configuration of the record file will be described below.

In the first configuration, records in the record file have a memory area for identification information (record number), a memory area for record data, and a memory area for one backup data. More specifically, in the first configuration, in each of the records, one record data and one backup data can be stored.

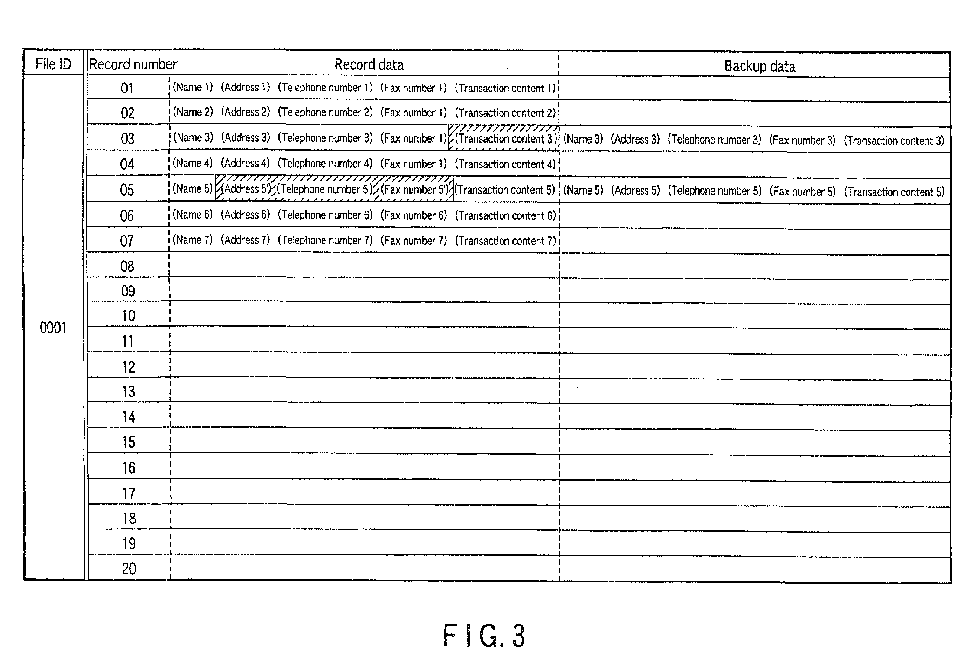

FIG. 3 is a diagram showing the first configuration of the record file.

The first configuration shown in FIG. 3 is a configuration of a fixed-length sequential record file. The record file of the first configuration is specified by a file ID. The record file specified by the file ID has a record area which stores a plurality of data (records) in units of records. Record numbers are allocated to the records in the record area. A record data area and a backup data area are set in each of the records with the record numbers allocated. In the record data area, the latest record data (this is handled as record data of the record) is stored. In the backup data area, data (i.e., record data before update) before data in the record data area is rewritten with current data is stored.

In the example shown in FIG. 3, backup data is stored in each of records of record number "03" and record number "05". More specifically, in each of the records of record numbers "03" and "05", data are written in a record data area and a backup data area, respectively. This means that the records of record numbers "03" and "05" are updated at least once. In the record of the first configuration, when data is rewritten, data stored in the record data area of the record is moved to the backup data area of the record, and the latest data (rewrite data) is written in the record data area of the record. With this configuration, in each of the records, the latest data and data obtained immediately before the data is updated with the latest data are always stored.

The data stored in each of the records of the record file can be accessed by a file ID and a record number. For example, in the example shown in FIG. 3, file ID "0001" and record number "01" are designated to make it possible to access data stored in a record data area of record number "01". More specifically, also to a record of record number "03" (or "05") in which backup data is stored, file ID "0001" and record number "03" (or "05") are designated to make it possible to access data stored in the record data area of record number "03" (or "05").

Data (data before update) stored in the backup data area of record number "03" (or "05") can be accessed by a predetermined operation. As methods of accessing data stored in the backup data area, various methods are conceived. For example, a command code which requests access to data in the backup data area may be defined, or the backup data area may be designated and defined by a processing parameter in the command. On the basis of a receiving order of specific commands, the number of times of receiving of the specific commands, or the like, data in the backup data area may be accessed.

A case in which data in a backup data area of a current record is accessed by a command which designates a current record will be described below.

For example, when the IC card 1 having the record file as shown in FIG. 3 receives a read request command (read record command) of data which designates a record having file ID "0001" and record number "03", the CPU 11 performs a process of reading data from the record data area in the record having file ID "0001" and record number "03". At this time, in the IC card 1, the current record corresponds to the record having file ID "0001" and record number "03". Information representing the current record is stored in, for example, the working memory 13.

In this state, subsequently, when a read record command which designates the current record is received, the CPU 11 performs a process of reading data in a backup data area in the record having file ID "0001" and record number "03" and serving as a current record. It is assumed that the number of times of reading in a backup data area by the read record command which designates the current record is stored in, for example, the working memory 13.

It is assumed that, when the read record command which designates the current record is received twice in succession, the CPU 11 performs a process of processing the command as an error because the data in the backup data area is read in advance or performs a process of reading data in the record data area of the record. In particular, in the former mode, the IC card processing apparatus 2 receives an error notification from the IC card 1 to make it possible to easily identify that the data in the backup data area in the record is read. In the latter mode, the IC card processing apparatus 2 gives the IC card 1 a read command which designates a current record in succession to make it possible to alternately read data in record data areas in records and data in the backup data area.

A flow of a data rewriting process to each of the records in the record file of the first configuration will be described.

When a command is received from the IC card processing apparatus 2 (step S10), the CPU 11 determines whether the command received by a command code or the like is a command which requests data to be rewritten (step S11). When it is determined that the command received is a data rewrite command (step S11, YES), the CPU 11 specifies a record designated by the command (step S12). For example, when a file ID and a record number are designated, the CPU 11 determines that data in a record specified by the designated file ID and the designated record number is rewritten.

When the designated record is specified, the CPU 11 determines whether a backup data area is set in the designated record (step S23). In this determination, it is determined whether data before update in the designated record is stored as backup data. When it is determined that a backup data area is set in the record designated, the CPU 11 moves data stored in the record data area of the record to the backup data area (step S14). The CPU 11 reads data stored in the record data area of the record and performs a process of storing the read data in the backup data area. For example, in the step S14, when data is stored in the backup data area of the record, data read from the record data area is overwritten on the data in the backup data area (more specifically, the data in the backup data area in a designated record is rewritten with data read from the record data area).

The record data area and the backup data area in each of the records are different from each other only in meanings. Therefore, as the process in the step S14, the record data area and the backup data area are exchanged in the record, and data may be written in the exchanged record data area. More specifically, in a data updating process, the record data area is changed into the backup data area, and the backup data area is changed into the record data area, so that data stored in the record data area before update (backup data area after update) may be changed into backup data.

In this case, definitions of the record data area and the backup data area in the record are changed (exchanged), and data in a backup data area before update (record data area after update) is rewritten, whereby rewriting of the record data area and the backup data area in the record can be realized. In this case, since data in the record data area is merely rewritten (data in the backup data area need not be rewritten), a processing time can be expected to be shortened.

When the data stored in the record data area is moved to the backup data area, the CPU 11 rewrites the data in the record data area in the record into rewrite data included in a received rewrite command (step S15). When rewriting of data in the record data area is normally ended, the CPU 11 transmits a response, representing that the process to the received command is normally ended, to the IC card processing apparatus 2 (step S16) to end the process.

When data rewriting to the record data area fails in the step S15 (or when writing of rewrite data included in the received command in the record data area cannot be retried), the CPU 11 may write the data moved to the backup data area of the record in the record data area of the record again to perform a recovering process of the record. In this manner, when data writing in the record data area fails, the data in the record data area is recovered with the data in the backup data area (returns to a state before the command is received) to make it possible to stabilize the operation of the IC card.

As described above, in the writing process to the record file of the first configuration, when data in a certain record is to be updated, data before update in the record is saved in the backup data area, and the latest data (rewrite data) is written in the record data area as the data of the record.

In this manner, data before update can be stored by a pseudo two-dimensionally arranged file as needed without giving a command which stores the data before update as another record.

A data reading process to each of the records in the record file of the first configuration will be described below.

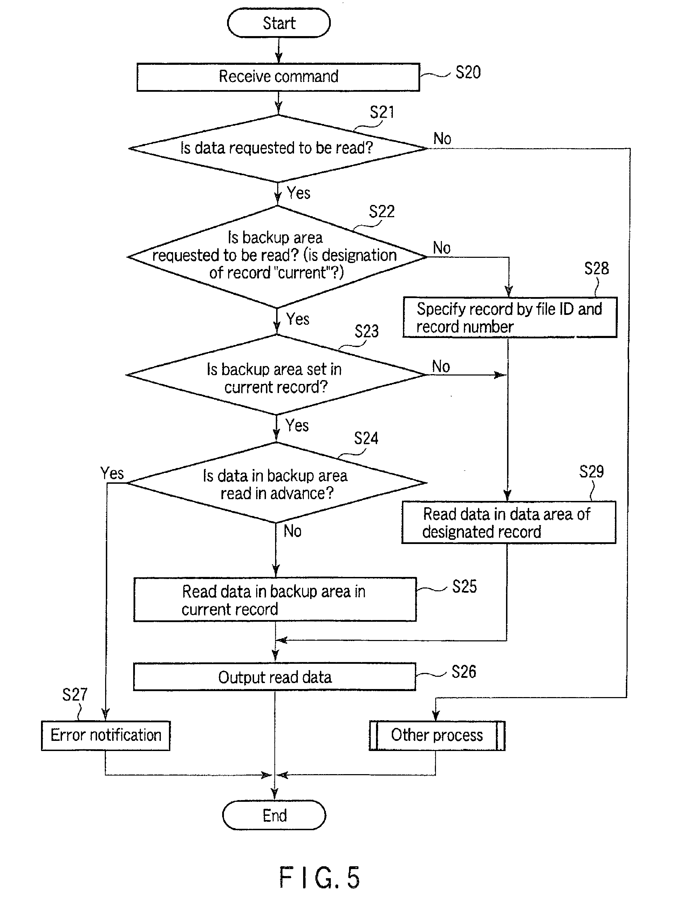

FIG. 5 is a flow chart for explaining a data reading process to a record in the record file of the first configuration.

When a command is received from the IC card processing apparatus 2 (step S20), the CPU 11 determines, on the basis of a command code of the command, whether the command is a read record command which requests data to be read (step S21).

When it is determined that the received command is the read record command (step S21, YES), the CPU 11 determines whether the received read record command requests the backup data area to be read (step S22). As methods of requesting the backup data area to be read, the following modes can be conceived. For example, a request to read the backup data area may be expressed by an executing procedure of a specific command, or a request to read the backup data area may be directly expressed by the contents (information included in command data) of a command.

As a mode which expresses a request to read the backup data area by an executing procedure of a specific command, the backup data area may be read when the specific command is given in succession, or the backup data area may be read when commands of two or more types are given in a specific order. As a mode which directly requests the backup data area to be read by the contents (information included in command data) of a command, the backup data area may be designated to be read by a command code, a processing parameter, or the like. According to the above operation modes, the CPU 11 determines whether the received command is a command which requests the backup data area to be read.

As in processes shown in FIG. 5, when a read record command to which a "current record" is designated is given, a backup data area of the current record is designed to be read. In this mode, the CPU 11 determines, as the process in the step S22, whether the record to be read in the command is designated by a record number or designated as "current code" (step S22).

When the record is designated as "current code" in the read record command, that is, when the receive command requests the backup data area to be read (step S22, YES), the CPU 11 determines whether a backup data area is set in a present current record (designated record) (step S23).

When it is determined that the backup data area is set in the designated record (step S23, YES), by a read record command received immediately before the received command, the CPU 11 determines whether data in the backup data area in the record is read in advance (step S24). More specifically, in the step S24, by the received read command, the CPU 11 determines whether the data in the backup data area is read. In other words, in the step S24, the CPU 11 determines whether a command to request the data in the backup data area to be read is received in succession.

When it is determined that the data in the backup data area in the current record is not read in advance (step S24, NO), the CPU 11 reads the data in the backup data area in the record (current record) designated by the command (step S25). When the data in the backup data area in the current record is read, the CPU 11 transmits response data including the read data to the IC card processing apparatus 2 serving as a transmission source of the command (step S26). In this manner, by the processes in the steps S20 to S26, in the IC card 1, the data in the backup data area in the current record is read.

In the processes shown in FIG. 5, in the step S22, when the record designated by the received command is not a "current record", i.e., when designation of a record in the received command is performed by a file ID and a record number (step S22, NO), the CPU 11 determines that the read record command requests data (latest data) in the record data area of a designated record to be read.

More specifically, when designation of a record in a received command is performed by a file ID and a record number (step S22, NO), the CPU 11 specifies a record (designated record) to be read by a file ID and a record number (step S28). More specifically, the CPU 11 specifies an EF serving as a record file by the file ID designated by the command, and a record in the EF is specified on the basis of the record number. At this time, the CPU 11 sets the specified record as a current record.

When a record is specified by a file ID and a record number which are designated by a received command, the CPU 11 reads data in a record data area of the specified record (step S29) and transmits response data including the read data to the IC card processing apparatus 2 serving as a transmission source of the command (step S26).

In the processes in FIG. 5, when it is determined in step S23 that a backup data area is not set in a current record (step S23, NO), the CPU 11 shifts to step S29 to perform a process of reading data in the record data area in the current record. However, NO is determined in step S23 in the case in which, although a command which requests the backup data area to be read is received, the backup data area is not set in the record (current record) designated by the command. For this reason, the CPU 11 may shift to step S27 to transmit a response representing that the command is an error to the IC card processing apparatus 2 serving as a transmission source of the command.

In the processes shown in FIG. 5, when it is determined in step S24 that the data in the backup data area is read in advance by an immediately previous read command (step S24, YES), the CPU 11 transmits a response representing that the command is an error to the IC card processing apparatus 2 serving as a transmission source of the command (step S27). This is a mechanism which prevents the data in the backup data area in the specific record (current record) from being read in succession even though a command (read record command which designates the current record) which requests the backup data area to be read is given in succession.

When it is determined in the step S24 that the data in the backup data area is read in advance by an immediately previous read command (step S24, YES), the CPU 11 may shift to step S29 as indicated by a dotted line in FIG. 5 to perform a process of reading the data in the record data area in the current record. This is a mechanism which alternately reads the data in the backup data area and the data in the record data area in the specific record (current record) when a command (read record command which designates a current record) which requests the backup data area to be read is given in succession. In this case, in the IC card processing apparatus 2, the read record command which designates the current record is given in succession to make it possible to perform control such that the data in the backup data area and the data in the record data area in the current record are alternately read from the IC card 1.

In the reading process described above, the latest data stored in the record data area in the record is designated to be read to the read command which designates a record number. To the read command (command which requests the data in the backup data area to be read) which designates the current record, data stored in the backup data area in the record is designated to be read.

In this manner, data stored in a pseudo two-dimensionally arranged file can be easily read, and the latest data and data before update can be easily read with respect to data such as transaction history information predicted to be updated without making management or the like of record numbers complicated.

A second configuration of the record file will be described below.

In the second configuration, each record in a record file has a storage area for identification information (record number), a storage area for record data, and a storage area for a plurality of backup data. More specifically, in the second configuration, one record data and a plurality of backup data can be stored in each of the records.

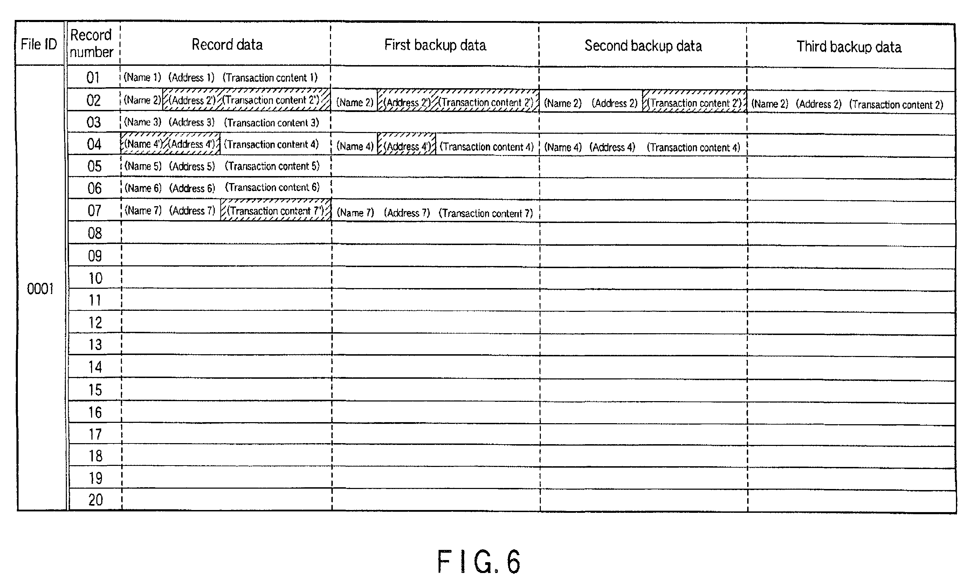

FIG. 6 is a diagram showing the second configuration of the record file.

The second configuration shown in FIG. 6 is a configuration of a fixed-length sequential record file. The record file of the second configuration is specified by a file ID. The record file specified by the file ID has a record area which stores a plurality of data (records) in units of records. Record numbers are allocated to the records in the record area. Each of the records to which the record numbers are allocated has one record data area and a plurality of backup data areas. In the record data area, the latest data (this is handled as data of the record) of the record is stored. In each of the backup data areas, old data (data before update) are sequentially stored when the data in the record data area is updated. The data before update are sequentially written in a plurality of backup data areas in one record. In other words, in the file of the second configuration, old data the number of which is equal to the number of backup data areas are stored in units of records.

For example, in the example shown in FIG. 6, the latest data is stored in the record data area in a record of record number "02", and old data corresponding to three times are sequentially stored in three backup data areas, respectively. This means that each of the records of record number "02" is updated at least three times. When the data in the record data area is updated to the record, the data stored in the record data area is moved to a first backup data area in which first-previous-generation data is stored, the data stored in the first backup data area is moved to a second backup data area in which a second-previous-generation data is stored, and the data stored in the second backup data area is moved to a third backup data area in which third-previous-generation data is stored. With this configuration, in the records, the latest data and the plurality of backup data are always stored.

The data stored in the record data areas in each of the records of the record file can be accessed by designating a file ID and a record number as in the first configuration. In contrast to this, the data stored in the backup data areas in each of the records can be accessed by a predetermined operation.

As methods to access data stored in the backup data areas in each of the records, various methods are conceived. For example, a command code which requests the data in the backup data area to be accessed may be defined, or a command code may be defined such that the backup data area is designated by a processing parameter in the command. On the basis of an order of receiving specific commands, the number of times of receiving the specific commands, or the like, the data in the backup data area may be accessed.

The case in which the data in the backup data area is accessed by a command which designates a "current record" will be described below.

For example, when a read request command (read record command) of data which designates a record having file ID "0001" and record number "02" shown in FIG. 6 is received, the CPU 11 performs a process of reading data in the record data area in the record having file ID "0001" and record number "02". At this time, in the IC card 1, a current record corresponds to the record having file ID "0001" and record number "02". Information representing the current record is stored in, for example, the working memory 13.

In this state, when a read request command (read record command) which designates a current record is received, the CPU 11 performs a process of reading the data in the backup data area in the record having file ID "0001" and record number "02" and serving as a current record. It is assumed that the number of times of reading the backup data area by the read record command which designates the current record is stored in, for example, the working memory 13. When the read record command of data which designates the record having file ID "0001" and record number "02" is also received again (twice in succession), as described above, the data in the first backup data area may be read.

When the same command is received in succession, i.e., when the read record command which designates the current record is received twice in succession, the CPU 11 performs a process of reading the data in the second backup data area in the record having record number "02" and serving as the current record. Even when the read record command of the data which designates the record having the file ID "0001" and record number "02" is received three time in succession, as described above, the data in the second backup data area may be read.

Furthermore, when the same command is received in succession, i.e., when the read record command which designates the current record is received three times in succession, the CPU 11 performs a process of reading the data in the third backup data area in the record having record number "02" and serving as the current record. Even when the read record command of data which designates the record having file ID "0001" and record number "02" is received four times in succession, as described above, the data in the third backup data area may be read.

In this case, it is assumed that the number of backup data areas is three or less for each record. In such a state, when the read record command which designates the current record is received four times in succession, because data in all the backup data areas are read in advance, the CPU 11 processes the command, as an error or performs a process of reading the data in the record data area in the record. In particular, in the former mode, the IC card processing apparatus 2 receives an error notification from the IC card 1 to make it possible to easily identify that the data in all the backup data areas in the record are read. In the latter mode, the IC card processing apparatus 2 gives the read command which designates the current record to the IC card 1 in succession, whereby the data in the record data areas in the records and the data in the backup data areas can be sequentially and circularly read.

A data rewriting process to each of the records in the record file of the second configuration will be described below.

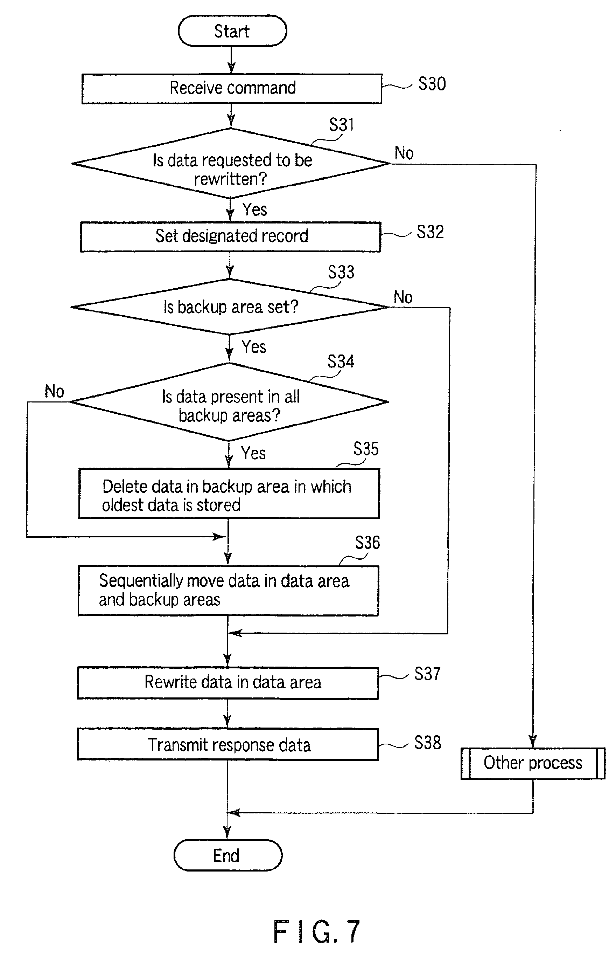

FIG. 7 is a flow chart for explaining the data rewriting process to the records in the record file of the second configuration.

When a command is received from the IC card processing apparatus 2 (step S30), the CPU 11 determines, on the basis of a command code of the command, whether the command is a command which requests data to be rewritten (step S31). When it is determined that the received command is the data rewrite command (step S31, YES), the CPU 11 specifies a record designated by the command (step S32). For example, when a file ID and a record number are designated, the CPU 11 determines that data in a record specified by the designated file ID and the designated record number should be rewritten.

When the designated record is determined, the CPU 11 determines whether a backup data area is set in the designated record (step S33). In this determination, it is determined whether data before update is set to be stored as backup data in the designated record. When it is determined that the backup data area is set in the record designated, the CPU 11 performs a process of sequentially moving data stored in the record data area and the backup data areas in the record to the next backup data area (steps S34 to S36).

For example, the CPU 11 determines whether data are stored in all the backup data areas (step S34). When it is determined that the data are stored in all the backup data areas, the CPU 11 deletes data in the backup data area in which the oldest data is stored (step S35). In such a state, the CPU 11 sequentially moves the data in the record data area and the backup data areas to the backup data areas (step S36).

The processes in the steps S34 to S36 may be realized in such a manner that the data in the record data area and the backup data areas in the record are sequentially overwritten in the next backup data area or data in the record data area is overwritten in the backup data area in which the oldest data is stored. In any case, as a result, the oldest data is deleted in the record and the data in the record data area and in the backup data areas are stored in the backup data areas, respectively.

When the data in the record data area and the backup data areas in the record are sequentially moved to the backup data areas, the CPU 11 rewrites the data in the record data area of the record with rewrite data included in the received rewrite command (step S37). When rewriting of data in the record data area is normally ended, the CPU 11 transmits a response representing that the process to the received command is normally ended to the IC card processing apparatus 2 (step S38) to end the process.

When data rewriting to the record data area fails in the step S37 (or when writing of rewrite data included in the received command in the record data area cannot be retried), the CPU 11 may write the data moved to the backup data area from the record data area in the record data area of the record again to perform a recovering process of the record. In this manner, when data writing in the record data area fails, the data in the record data area is recovered with the data in the backup data area (returns to a state before the command is received) to make it possible to stabilize the operation of the IC card 1.

In the above writing process, when data in a certain record is to be updated, the data in the record data area and the backup data areas are sequentially saved to the backup data area to write the latest data (rewrite data) in an area for the record data serving as the data in the record. In this manner, the latest data and a plurality of data (data of a plurality of generations) before update can be easily stored in a pseudo two-dimensionally arranged file without giving a command to store data before update as another record.

In the writing process, when an amount of backup data exceeds the capacity of all the backup data areas, the oldest data is deleted to always store data which are older than the latest data by a period corresponding to the number of backup data areas in the backup data areas. In this manner, the data of a plurality of generations including the latest data to the data which are older than the latest data by a period corresponding to the number of backup data areas can be stored in the backup data areas.

A data reading process to each of the records in the record file of the second configuration will be described below.

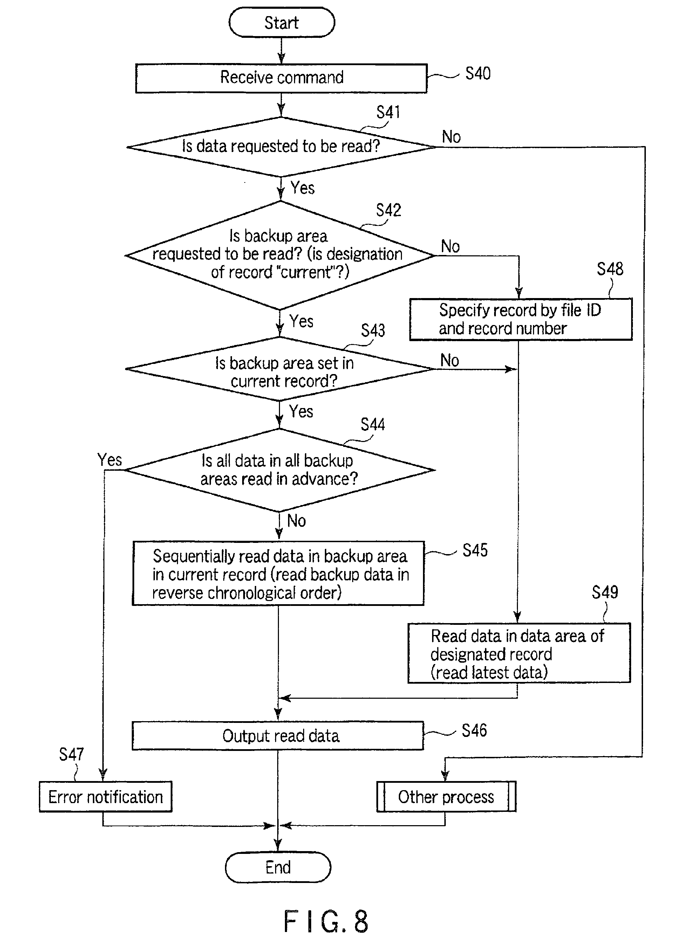

FIG. 8 is a flow chart for explaining the data reading process to the record in the record file of the second configuration.

When a command is received from the IC card processing apparatus 2 (step S40), the CPU 11 determines, on the basis of a command code of the command, whether the command is a read record command which requests record data to be read (sep S41).

When it is determined that the received command is the read record command (step S41, YES), the CPU 11 determines whether the received read record command is a command which requests a backup data area to be read (step S42).

As described above, as the methods of requesting the backup data area to be read, the various modes are conceived. For example, the read request for the backup data area may be expressed by an executing procedure or the like of a specific command, or a request to read the backup data area may be directly expressed by the contents (information included in command data) of a command. Furthermore, as the mode in which the read request for the backup data area is expressed by the executing procedure of the specific command, the backup data areas may be sequentially read when the specific command is given in succession, or the backup data areas may be sequentially read when commands of a plurality of types are given in a specific order. As the mode in which the read request for the backup data area is directly expressed by the contents (information included in command data) of the command, reading of the backup data areas of each record may be designated by a command code, a processing parameter, or the like. According to the operation modes described above, the CPU 11 determines whether the received command is the command which requests the backup data area to be read.

In this case, as in processes shown in FIG. 8, when a read record command to which a "current record" is designated is given, backup data areas of the current record are designated to be sequentially read. In this mode, the CPU 11 determines whether, as the process in the step S42, a record to be read in the command is designated by a record number (or a record other than a current record is designated) or the record is designated as the "current record" (step S43) .

When the record is designated as the "current record" in the read record command, i.e., when the received command requests the backup data area to be read (step S42, YES), the CPU 11 determines whether the backup data area is set in a present current record (step S43).

When it is determined that the backup data area is set in the current record (step S43, YES), the CPU 11 determines whether a process of reading the data in all the backup data areas in the record is completed by read record commands received before the received command (step S44). More specifically, in the step S44, the CPU 11 determines whether the data in all the backup data areas are read by the previously received read commands.

When it is determined that the data in all the backup data areas in the current record are not read in advance (step S44, NO), the CPU 11 sequentially reads the data in the backup data areas in the record (current record) designated by the command (step S45). For example, each time the CPU 11 reads the data in the backup data area, a counter (not shown) arranged in the working memory 13 is counted up. In this manner, each time a read record command which designates a current record is received in succession, the CPU 11 sequentially reads the data in the backup data areas on the basis of the value of the counter.

When the data in the backup data areas in the current record are read, the CPU 11 transmits response data including read data to the IC card processing apparatus 2 serving as a transmission source of the command (step S46). In this manner, by the processes in the steps S40 to S46, in the IC card 1, the data in the backup data areas of the current record are read. When the processes are repeated, the IC card 1 can sequentially read the data in the backup data areas.

In the processes shown in FIG. 8, in the step S42, when a "current record" is not designated as a record in the received command, i.e., when the record is designated by a file ID and a record number in the received command (step S42, NO), the CPU 11 determines that the read record command requests data (latest data) in the record data areas in the designated record to be read. However, when the read command which does not change the current record is received, the CPU 11 may shift to the step S43.

When the designation of the record in the received command is performed by a file ID and a record number (step S42, NO), the CPU 11 specifies a record (designated record) to be read by the file ID and the record number (step S48). More specifically, the CPU 11 specifies an EF serving as a record file by a file ID designated by the command, and specifies a record in the EF on the basis of the record number. At this time, the CPU 11 uses the designated record as a current record.

When a record is specified by the file ID and the record number designated in the received command, the CPU 11 reads data in the record data areas in the specified record (step S49) and transmits response data including read data to the IC card processing apparatus 2 serving as a transmission source of the command (step S46).

In the processes shown in FIG. 8, when it is determined in step S43 that the backup data area is not set in the current record (step S43, NO), the CPU 11 shifts to step S49 to perform a data reading process for the record data area in the current record. However, NO is determined in step S43 in the case in which, although a command which requests the backup data area to be read is received, the backup data area is not set in the record (current record) designated by the command. For this reason, the CPU 11 may shift to step S47 to transmit a response representing that the command is an error to the IC card processing apparatus 2 serving as a transmission source of the command.

In the processes shown in FIG. 8, when it is determined in step S44 that the data in all the backup data areas are read in advance by an immediately previous read command (step S44, YES), the CPU 11 transmits a response representing that the command is an error to the IC card processing apparatus 2 serving as a transmission source of the command (step S47). This is a mechanism which notifies that the data in all the backup data areas in a specific record (current record) are read in succession in advance when a command (read record command which designates a current record) which requests the backup data areas to be read is given in succession.

When it is determined in the step S44 that the data in all the backup data areas are read in advance by the previous read command and more previous read commands (step S44, YES), the CPU 11, as indicated by a dotted line in FIG. 8, may shift to step S49 to perform a process of reading the data in the record data areas in the current record. This is a mechanism which sequentially reads the data in the backup data areas and the data in the record data area in the specific record (current record) when a command (read record command which designates a current record) which requests the backup data areas to be read is given in succession. In this case, in the IC card processing apparatus 2, the read record command which designates the current record is given in succession to make it possible to perform control such that the data in the backup data areas and the data in the record data area in the current record are sequentially read from the IC card 1.

In the reading process described above, the latest data stored in the record data area in the record is designated to be read to the read command which designates a record number. To the read command (command which requests the data in the backup data areas to be read) which designates the current record, data stored in the backup data areas in the record are designed to be read. More specifically, when a specific record is requested in succession to be read after the data in the record data area is read, the data in the backup data areas are sequentially read.

In this manner, a plurality of backup data stored in a pseudo two-dimensionally arranged file can be easily and sequentially read, and the latest data and a plurality of data before update can be easily read with respect to data such as transaction history information predicted to be updated without making management or the like of record numbers complicated.

A third configuration of the record file will be described below.

In the third configuration, in a record file, a record area to store a record and a backup area (data saving area) to store backup data are arranged. The backup area is not secured in advance in accordance with records in the record area, but is secured as needed depending on backup data to be stored. More specifically, in the first and second configurations, a storage area to store backup data is secured in a storage area of each of the records. However, in the third configuration, backup data to the records are stored in a storage area (backup area) different from the storage areas of the records. In the third configuration, one backup data is stored in one record.

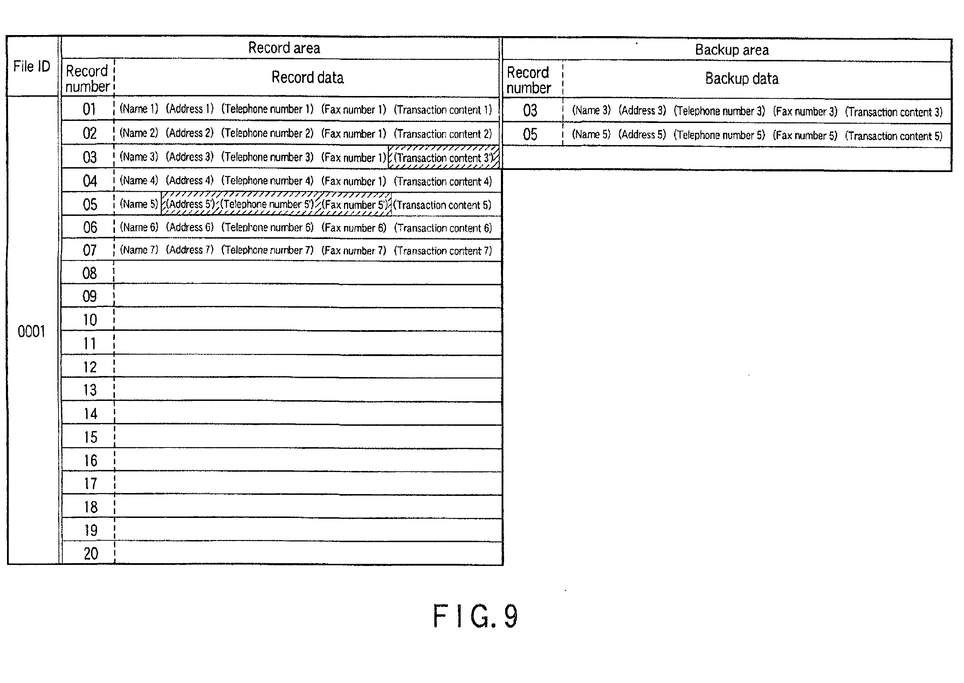

FIG. 9 is a diagram showing the third configuration of the record file.

The third configuration shown in FIG. 9 is a configuration of a fixed-length sequential record file. A record file of the third configuration shown in FIG. 9 is specified by a file ID. The record file specified by the file ID has a record area and a backup area. In the record area, a plurality of records are stored. Each of the records stored in the record area is configured by a record number and record data. A storage area to store a record number and record data are allocated to each of the records.

In the backup area, a backup record to any one of the records in the record area is stored. Each of the backup records stored in the backup area is configured by a record number and backup data. The record number of each of the backup records is a record number representing a record which is backup. More specifically, each of the backup data in the backup area is record data (i.e., data which is backup) obtained immediately before record data in a record indicated by a corresponding record number is updated.

For example, in a backup area shown in FIG. 9, backup data to a record having record number "03" and backup data to a record having record number "05" are stored. More specifically, in the records having record numbers "03" and "05", the backup data are stored in the backup areas. This means that the records having record numbers "03" and "05" are updated at least once.

In the third configuration, when a certain record is updated, the record data in the record stored in the record area is written as backup data in the backup area in association with the record number. More specifically, in the record file, after the backup data is stored in the backup area, the record data of the record in the record area is rewritten. In this manner, the latest record data is stored in the record area, and record data obtained immediately before the record data is updated with the latest record data is stored in the backup area as backup data.

The record data of each of the records in the record area can be accessed by a file number ID and a record number. For example, in an example shown in FIG. 9, file ID "0001" and record number "01" are designated to make it possible to access record data of record number "01". Similarly, record data of record number "03"(or "05") at which backup data is present can also be accessed by designating file ID "0001" and record number "03" (or "05").

The backup data (data before update) of each of the records in the backup area can be accessed by a predetermined procedure. As a method of accessing the backup data in the backup area, for example, a command which requests the backup data to be accessed may be defined, or a backup data area may be defined by a processing parameter in a command. On the basis of an order of receiving specific commands, the number of times of receiving the specific commands, and the like, the backup data may be accessed.

A case in which backup data of a current record is accessed by a command which designates a current record will be described below.

For example, the CPU 11 of the IC card 1 which receives a read request command (read record command) for data which designates file ID "0001" and record number "03" reads, from the record area, record data having record number "03" in the record file having file ID "0001" as shown in FIG. 9. At this time, in the IC card 1, the current record corresponds to the record having record number "03" in the record file having file ID "0001". The information representing the current record is stored in, for example, the working memory 13.

In this state, subsequently, when a read record command which designates the current record is received, the CPU 11 reads backup data for the record having record number "03" in the record file having file ID "0001" and serving as the current code, from the backup area of the record file. It is assumed that the number of times of reading backup data area by the read record command which designates the current record is stored in, for example, the working memory 13.

When the read record command which designates the current record is received twice in succession, the CPU 11 processes the read record command as an error because the backup data to the current record is read in advance, or the CPU 11 performs a process of reading the record data of the current record. In the former mode, the IC card processing apparatus 2 receives an error notification from the IC card 1 to make it possible to reliably identify that the backup data to the record is read. In the latter mode, the IC card processing apparatus 2 gives a read record command which designates the current record to the IC card 1 in succession to make it possible to alternately read the record data of the current record and the backup data to the current record.

A flow of a data rewriting process to each of the records in the record file of the third configuration will be described below.

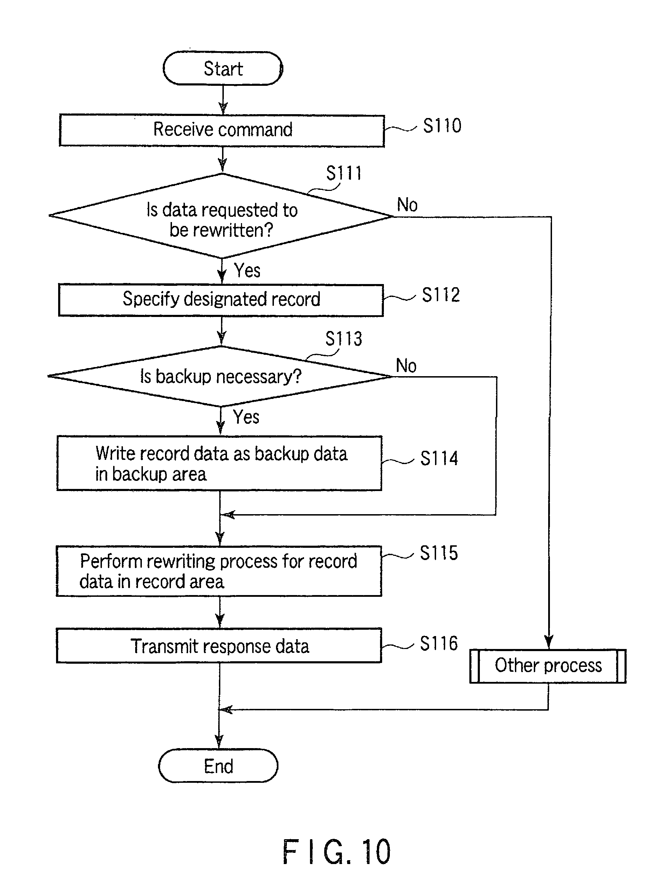

FIG. 10 is a flow chart for explaining the data rewriting process to the record in the record file of the third configuration.

when a command is received from the IC card processing apparatus 2 (step S110), the CPU 11 determines, on the basis of a command code, whether the received command is a command which requests data to be rewritten (step S111). When it is determined that the received command is the data rewrite command (step S111, YES), the CPU 11 specifies a record designated by the command (step S112). For example, when a file ID and a record number are designated in the received command, the CPU 11 determines that data of a record specified by the designated file ID and the designated record number should be rewritten.

When the designated record is specified, the CPU 11 determines whether record data before update in the designated record is stored as backup data (step S113). Various setting methods can be conceived as methods of setting necessity of backup of a designated record. For example, the necessity of backup to each of the records may be set to each of the records or may be set to each of the record files. The necessity of backup may be designated by a parameter in a rewrite command, or backup may be performed to only a rewrite command from a specific transmission source.

When it is determined that the record designated by the determination requires backup (step S113, YES), the CPU 11 performs a process of storing record data of the record in the backup area as backup data of the record (step S114). In this case, the CPU 11 reads the record data of the record and writes the read data in the backup area as backup data in association with a record number of the record. For example, in the step S114, when the backup data of the record is stored in the backup area in advance (i.e., the backup data of the record number is present in advance), the CPU 11 overwrites the read record data on the backup data of the record number. More specifically, the CPU 11 rewrites the backup data corresponding to the record number in the backup area with record data obtained immediately before the record is updated.

When the backup data is written in the backup area, the CPU 11 rewrites the record data of the record in the record area with rewrite data designated by a rewrite command (step S115). When rewriting of data in the record data is normally ended, the CPU 11 transmits a response representing that the process to the received rewrite command is normally ended to the IC card processing apparatus 2 (step S116) to end the process.

When the rewriting of the record data fails in the step S115 (for example, when rewriting of record data cannot be retried), as a recovering process to the record, the CPU 11 may write the backup data of the record written in the backup area as the record data of the record again. In this manner, in the IC card 1, when the rewriting of the record data fails, a function of recovering (returning to the state before the command is received) the record data with the backup data stored in the backup area can also be realized. According to this function, the operation of the IC card can be stabilized.

As described above, the record data rewriting process to the record file of the third configuration is realized by a process of saving record data before update in the backup area as backup data associated with a record number to rewrite the record data of the record in the record area with the latest data (rewrite data).

In this manner, without giving a command which stores record data before update as another record, a record data rewriting process can be executed in a state in which the record data before update is stored as needed.

A data reading process to each of the records in the record file of the third configuration will be described below.

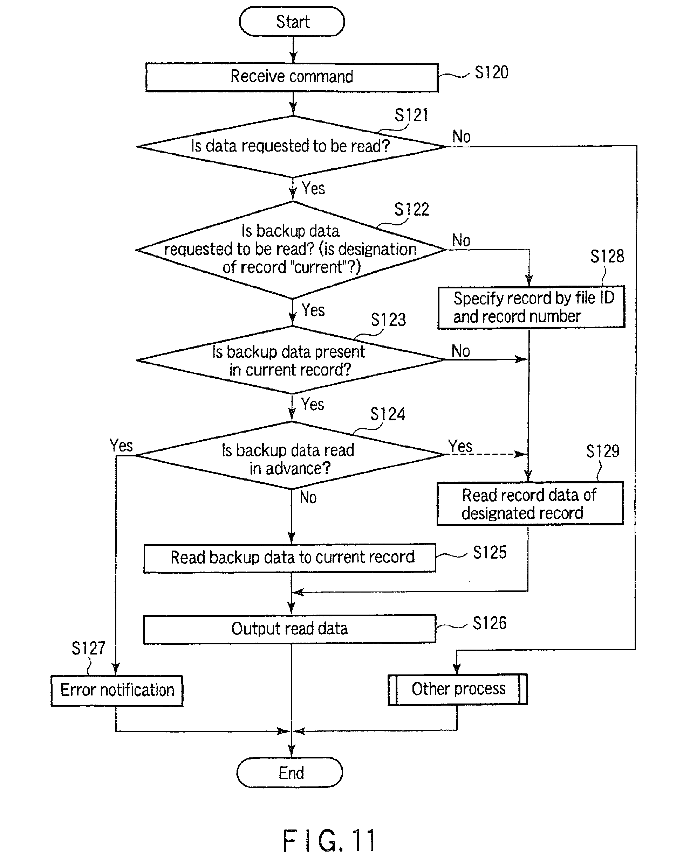

FIG. 11 is a flow chart for explaining the data reading process to the record in the record file of the third configuration.

When a command is received from the IC card processing apparatus 2 (step S120), the CPU 11 determines, on the basis of a command code of the command, whether the command is a read record command which requests data to be read (step S121). When it is determined that the received command is the read record command (step S121, YES), the CPU 11 determines that the received read record command requests the backup data to be read (step S122).

As the methods of requesting the backup data to be read, the various modes are conceived. For example, a request to read the backup data may be expressed by an executing procedure or the like of a specific command, or the request to read the backup data may be directly expressed by the contents (information included in command data) of a command.

As the mode in which the request to read the backup data is expressed by the executing procedure of the specific command, the backup data may be read when the specific command is given in succession, or the backup data may be read when commands of a plurality of types are given in a specific order. As the mode in which the backup data is directly requested to be read by the contents (information included in command data) of the command, the backup data may be designated to be read by a command code, a processing parameter, or the like. According to the operation modes described above, the CPU 11 determines whether the received command is the command which requests the backup data area to be read.

In this case, as in processes shown in FIG. 11, when a read record command to which a "current record" is designated is given, backup data of the current record are designed to be read. In this mode, the CPU 11 determines whether the request is a request to read the backup data by checking whether a record to be read in the received read record command is designated as a "current record" or designated by a record number (step S122).

When the record is designated as the "current record" in the read record command, i.e., when the received command requests the backup data to be read (step S122, YES), the CPU 11 determines whether the backup data to a present current record (designated record) is present in the backup area (step S123). This can be determined by checking whether the record number of the current record is present in the backup area.

When it is determined that the backup data to the present current record (designated record) is present (step S123, YES), the CPU 11 determines whether a process of reading the backup data is performed as a process performed by an immediately previous command of the read record command (step S124). In other words, in the step S124, the CPU 11 determines whether a command which requests the backup data to be read is received in succession.

When it is determined that the backup data to the current record is not read in advance (step S124, NO), the CPU 11 reads the backup data to the record (current record) designated by the command from the backup area (step S125). When the backup data to the current record is read, the CPU 11 transmits response data including the read data to the IC card processing apparatus 2 serving as a transmission source of the command (step S126). In this manner, by the processes in the steps S120 to S126, in the IC card 1, the backup data of the current record is read.

In the processes shown in FIG. 11, in the step S122, when the "current record" is not designated as a record in the received command, i.e., designation of a record in the received command is performed by a file ID and a record number (step S122, NO), the CPU 11 determines that the command requests the record data of the designated record to be read from the record area.

More specifically, when the record is designated by the file ID and the record number in the received command (step S122, NO), the CPU 11 specifies the record designated by the file ID and the record number as an object to be read (step S128). More specifically, the CPU 11 specifies an EF serving as a record file by a file ID designated by the command, and specifies a record in the EF on the basis of the record number. At this time, the CPU 11 sets the specified record as a current record.

When a record is specified by the file ID and the record number designated in the received command, the CPU 11 reads record data in the specified record (step S129) and transmits response data including the read data to the IC card processing apparatus 2 serving as a transmission source of the command (step S126).

In the processes shown in FIG. 11, when the backup data to the current record is not present (step S123, NO), the CPU 11 shifts to step S129 to perform a process of reading the record data of the current record. However, the CPU 11 may shift to step S127 to transmit a response representing that the command is an error to the IC card processing apparatus 2 serving as the transmission source of the command. In this case, the response representing that the command is an error may be notified that backup data to the record (current record) designated by the received command is not present.

In the processes shown in FIG. 11, when it is determined that the backup data is read in advance in the immediately previous command (step S124, YES), the CPU 11 transmits a response representing that the command is an error to the IC card processing apparatus 2 serving as the transmission source of the command, (step S127). This is a mechanism which prevents the backup data in the specific record (current record) from being read in succession when a command (read record command which designates the current record) which requests the backup data to be read is given in succession.

When it is determined in the step S124 that the backup data is read in advance by an immediately previous command (step S124, YES), the CPU 11 may shift to step S129 as indicated by a dotted line in FIG. 11 to perform a process of reading the record data in the current record. This is a mechanism which alternately reads the backup data and the record data of the specific record (current record) when a read record command which designates the current record is given in succession. In this case, in the IC card processing apparatus 2, the read record command which designates the current record is given in succession to make it possible to perform control such that the backup data and the record data of the current record are alternately read from the IC card 1.

In the reading process to the record file of the third configuration described above, the IC card 1 is designed to read the record data of the record in response to a read command which designates a record number and to read backup data to the record (current record) in response to a read command (command which requests the backup data to be read) which designates the current record.

In this manner, depending on the contents of the command, the record data of the specific record can be read, or the backup data can be read. More specifically, in an IC card having a record file as the third configuration, management or the like of record data and backup data can be facilitated. As a result, in the IC card, for example, with respect to data such as transaction history information predicted to be updated, the latest data (record data) and data before update (backup data) can be easily managed.

A fourth configuration of a record file will be described below.

In the fourth configuration, as in the third configuration, a record area to store a record and a backup area to store backup data are set in a record file. In the fourth configuration, a plurality of backup data can be stored in one record in the backup area.

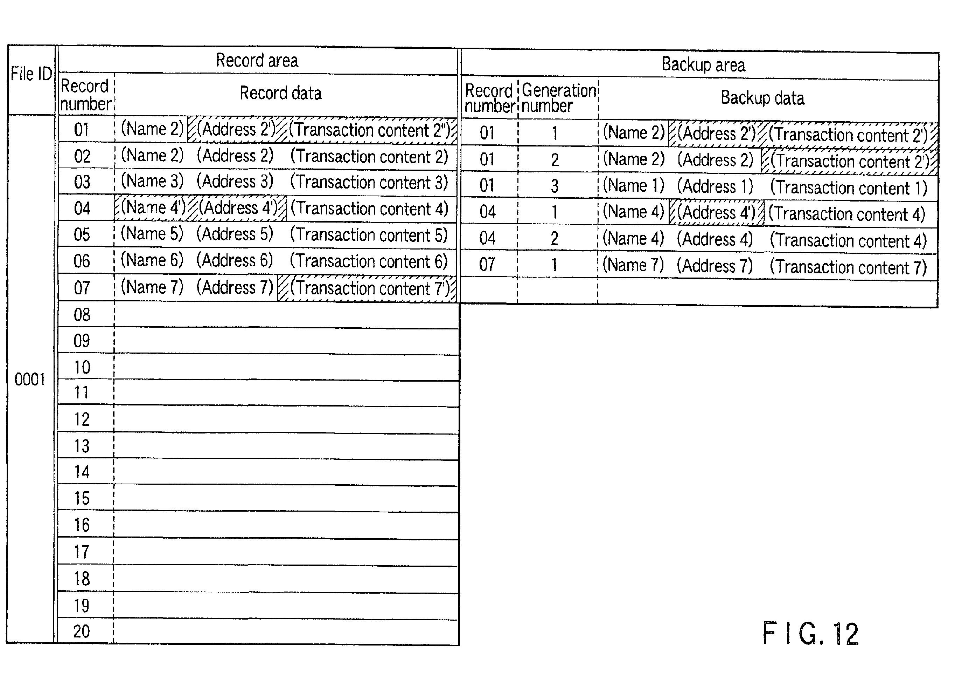

FIG. 12 is a diagram showing the fourth configuration of a record file.

The fourth configuration shown in FIG. 12 is a configuration of a fixed-length sequential record file. A record file of the fourth configuration shown in FIG. 12 is specified by a file ID. The record file shown in FIG. 12 has a record area and a backup area. In the record area, a plurality of records are stored. Each of the records stored in the record area is configured by a record number and record data. More specifically, in each of the records, a record number storage area and a record data storage area are allocated in the record area.

In the backup area, backup records to any one of records in the record area are stored. Each of the backup records stored in the backup area includes a record number, generation information (generation number), and backup data. More specifically, to each of the backup records, a record number storage area, a generation number storage area, and a backup data storage area are allocated in the backup area.

The record number of the backup record is a record number representing a record which is backup. The generation number of the backup record is information representing a generation of backup data to a corresponding record. A record to which the backup data belongs and the number of generations between the data of the current record and the backup data are identified by a corresponding record number and a corresponding generation number. More specifically, in the fourth configuration, backup data of a plurality of generations can be stored in one record. This means that not only record data obtained immediately before update (first generation) but also record data of a plurality of generations can be stored in one record as backup data.

The generation number may have an upper limit according to the number of storable generations. For example, in an operation mode in which backup data of three or less generations are stored, the upper limit of the generation number may be set to "3". In this case, backup data of three or less generations can be stored in each record. In the following explanation, it is assumed that the upper limit of the generation number is "3" and that backup data is generated each time the record data is updated.

For example, in the backup area shown in FIG. 12, to a record having record number "01", three backup data having generation number "1" (first generation), generation number "2" (second generation), and generation number "3" (third generation) are stored. This means that the record having record number "01" is updated at least three times. In the backup area shown in FIG. 12, to a record having record number "04", two backup data having generation number "1" (first generation) and generation number "2" (second generation) are stored. This means that the record having record number "04" is updated twice. In the backup area shown in FIG. 12, to a record having record number "07", one backup data of generation number "1" (first generation) is stored. This means that the record having record number "07" is updated once.

When the record data of the fourth configuration is to be updated, record data obtained immediately before update is stored in the backup area as first-previous-generation backup data (backup data having generation number "1"). At this time, when the backup data to the record is present in the backup area in advance, the generation numbers to these backup data are incremented (generations of the backup data become old). In this manner, the generation numbers of the plurality of backup data to the record are set in a chronological order.

When the upper limit of the generation number is set, backup data having a generation number larger than the upper limit is deleted. For example, when the upper limit of the generation number is "3", backup data (backup data having a generation number of "4" or more) having a generation number larger than "3" is deleted. With the above procedure, in the backup area, backup data of a plurality of generations to the records are stored.

In this case, as a method of accessing the record file of the fourth configuration, a method of accessing a record file of the third configuration can be applied. In this case, as an example of a method of accessing the record file of the fourth configuration, an operation mode in which record data is accessed according to a command which designates a file ID and a record number and backup data is accessed by a command which designates a "current record" will be described below.

In the access method, for example, file ID "0001" and record number "01" are designated to make it possible to access the record data having record number "01" shown in FIG. 12. At this time, the IC card 1 sets the record having record number "01" in the record file having file ID "0001" as a current record. Information representing the current record is stored in, for example, the working memory 13.

In this state, when a read record command which designates a current record is received, the CPU 11 reads first-previous-generation (generation number "1") backup data to the record serving as the current record and having record number "01" in the record file having file ID "0001" from the backup area of the record file. The number of times of reading the backup data by the read record command which designates the current record is stored in, for example, the working memory 13. Although the current record is not designated, when a read record command which designates a record having file ID "0001" and record number "01" is received twice in succession, as in the above description, the first-previous-generation backup data may be read.

Furthermore, when the same command is received in succession, i.e., when a read record command which designates a current record is received twice in succession, the CPU 11 reads a second-previous-generation (generation number is "2") backup data in the record serving as the current record and having record number "01". Even when a read record command which designates a record having a file ID "0001" and record number "02" is received three times in succession, as in the above description, the second-previous-generation backup data may be read.

Furthermore, when the same command is received in succession, i.e., when a read record command which designates a current record is received three times in succession, the CPU 11 reads a third-previous-generation (generation number is "3") backup data in the record serving as the current record and having record number "01". Even when a read record command which designates a record having a file ID "0001" and record number "02" is received four times in succession, as in the above description, the third-previous-generation backup data may be read.

In this case, it is assumed that the IC card 7. operates in a mode in which backup data of third or less generations to each of the records are stored. In this operation mode, when the read record command which designates a current record is received four times in succession, all backup data to the current record are read in advance. For this reason, the CPU 11 processes the command as an error or performs a process of reading the record data of the record. In the former mode, the IC card processing apparatus 2 receives an error notification from the IC card 1 to make it possible to easily identify that all the backup data to the current record are read. In the latter mode, the IC card processing apparatus 2 gives the read command which designates the current record to the IC card 1 in succession, so that the record data in the records and the backup data of the generations can be sequentially circulated and read.

A rewriting process to record data in the record file of the fourth configuration will be described below.

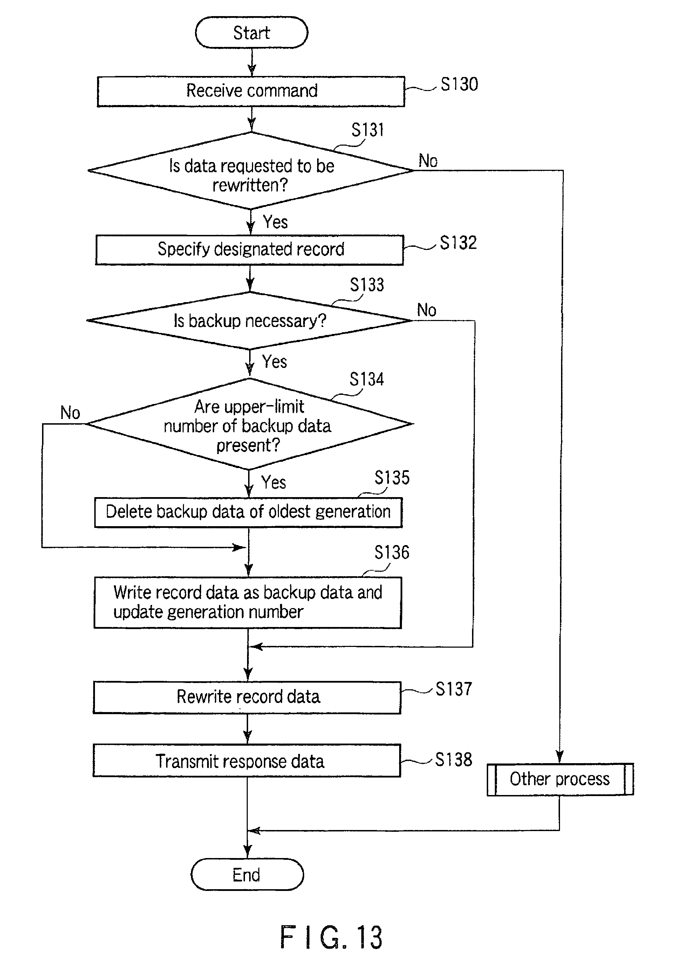

FIG. 13 is a flow chart for explaining the rewriting process to the record data in the record file of the fourth configuration.

When a command is received from the IC card processing apparatus 2 (step S130), the CPU 11 determines, on the basis of a commands code of the command, whether the received command is a command which requests data to be rewritten (step S131). When it is determined that the received command is the data rewrite command (step S131, YES), the CPU 11 specifies a record designated by the command (step S132). For example, when a file ID and a record number are designated, the CPU 11 determines that record data of the record specified by the designated file ID and the designated record number should be rewritten.

When the designated record is specified, the CPU 11 determines whether the designated record requires backup (step S133). Various setting methods can be conceived as methods of setting necessity of backup of a designated record. For example, the necessity of backup to each of the records may be set to each of the records or may be set to each of the record files. The necessity of backup may be designated by a parameter in a rewrite command, or backup may be performed to only a rewrite command from a specific transmission source.

When it is determined that the record designated by the determination requires backup, the CPU 11 performs a process of storing record data of the record in the backup area as backup data of the record (steps S134 to S136).

More specifically, the CPU 11 determines whether an upper-limit number of backup data to the record are stored in the backup area (step S134). For example, when the upper-limit number is "3", the CPU 11 determines whether backup data having generation number "3" is present. When it is determined that an upper-limit number of backup data are stored (step S134, YES), the CPU 11 deletes backup data of the oldest generation number (step S135). In this state, the CPU 11 performs a writing process to record data as the latest-generation backup data (step S136). More specifically, the CPU 11 writes the record data in the backup area as backup data having generation number "1". Accordingly, the CPU 11 increments (updates) a generation number of another backup data to the record which is present in the backup area.

When an upper-limit number of backup data are present, the processes in the steps S134 to S136 are realized by overwriting record data before update on the oldest backup data and updating the generation number of each of the backup data. When an upper-limit number of backup data are present, the processes may be realized by sequentially overwriting the record data before update in the record and the backup data of the generations on the backup data of the next generation. In any one of the realization modes, as a result, an upper-limit number of backup data to the record are stored in the backup area.

When the record data before update is stored as the latest backup data, the CPU 11 rewrites the record data of the record with rewrite data included in the received rewrite command (step S137). When the rewriting of the record data is normally ended, the CPU 11 transmits a response representing that the process to the received command is normally ended to the IC card processing apparatus 2 (step S138) to end the process.

When the rewriting of the record data fails in the step S137 (for example, when rewriting of record data cannot be retried), as a recovering process to the record, the CPU 11 may write the latest backup data (record data before update) stored in the backup area as the record data of the record again. In this manner, in the IC card 1, when the rewriting of the record data fails, a function of recovering (returning to the state before the command is received) the record data with the backup data stored in the backup area can also be realized. According to this function, the operation of the IC 1 card can be stabilized.

According to the writing process to the record file of the fourth configuration described above, when certain record data is to be updated, after the record data before update is saved as backup data in the backup area, the record data is rewritten. In the backup area, a plurality of backup data added with generation numbers in a reverse chronological order are stored. In this manner, the record data before update of a plurality of generations can be stored without giving a command which stores the record data before update as another record.

In the writing process described above, when an upper-limit number of backup data are stored in advance, the oldest backup data is deleted, and the latest backup data is stored. In this manner, in the backup area, an upper-limit number of backup data can be always stored at a maximum to the records in the backup area in the reverse chronological order.

A data reading process to each of the records in the record file of the fourth configuration will be described below.

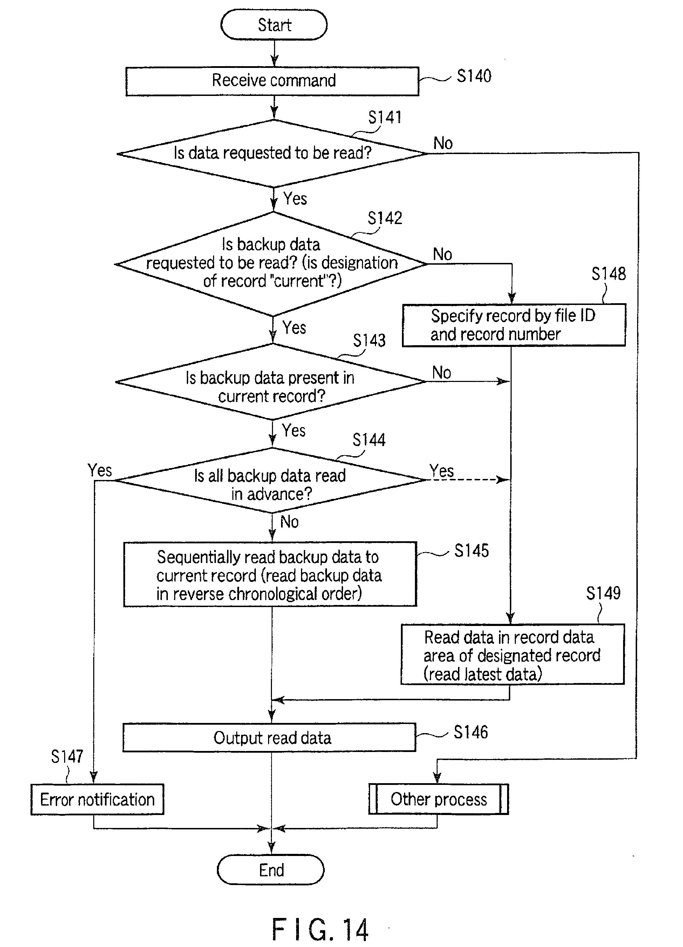

FIG. 14 is a flow chart for explaining the data reading process to the record in the record file of the fourth configuration.

When a command is received from the IC card processing apparatus 2 (step S140), the CPU 11 determines, on the basis of a command code of the command, whether the command is a read record command which requests record data to be read (sep S141). When it is determined that the received command is the read record command (step S141, YES), the CPU 11 determines whether the received read record command is a command which requests backup data to be read (step S142).

As the methods of requesting the backup data to be read, the various modes are conceived. For example, the read request for the backup data may be expressed by an executing procedure or the like of a specific command, or a request to read the backup data may be directly expressed by the contents (information included in command data) of a command. As the mode in which the read request for the backup data is expressed by the executing procedure of the specific command, the backup data may be read when the specific command is given in succession, or the backup data may be sequentially read when commands of a plurality of types are given in a specific order.

As the mode in which the read request for the backup data is directly expressed by the contents (information included in command data) of the command, reading of the backup data may be designated by a command code, a processing parameter, or the like. According to the operation modes described above, the CPU 11 determines whether the received command is the command which requests the backup data area to be read.

In this case, as in processes shown in FIG. 11, when a read record command to which a "current record" is designated is given, backup data of the current record are designed to be read. In this mode, the CPU 11 determines whether the request is a request to read the backup data by checking whether a record to be read in the received read record command is designated as a "current record" or designated by a record number (step S142).

When the record is designated as the "current record" in the read record command, i.e., when the received command requests the backup data to be read (step S142, YES), the CPU 11 determines whether the backup data to a present current record is present in the backup area (step S143).

When it is determined that the backup data to the current record is stored (step S143, YES), the CPU 11 determines whether a process of reading the backup data to the record is completed (step S144). More specifically, in the step S144, the CPU 11 determines whether all the backup data to the record are read in advance by the previously received read commands.

When it is determined that all the backup data to the current record are not read in advance (step S144, NO), the CPU 11 sequentially reads the backup data to the record (current record) designated by the command (step S145). For example, each time the backup data to the current record is read, the CPU 11 counts up a counter (not shown) arranged in the working memory 13. When the read record command which designates the current record is received in succession, the CPU 11 reads backup data of a generation number according to a value of the counter from the backup area.

When the backup data to the current record is read, the CPU 11 transmits response data including the read data to the IC card processing apparatus 2 serving as a transmission source of the command (step S146). In this manner, by the processes in the steps S140 to S146, in the IC card 1, the backup data to the current record is read. These processes are repeated to make it possible to sequentially read a plurality of backup data to the current record.

In the step S142, when a "current record" is not designated as a record in the received command, i.e., when the record is designated by a file ID and a record number in the received command (step S142, NO), the CPU 11 determines that the read record command requests record data of the designated record to be read. When a command which designates a current record by a file ID and a record number is received, the CPU 11 may shift to the step S143.

When the designation of the record in the received command is performed by a file ID and a record number (step S142, NO), the CPU 11 specifies a record (designated record) to be read by the file ID and the record number (step S148). More specifically, the CPU 11 specifies an EF serving as a record file by a file ID designated by the command, and specifies a record in the EF on the basis of the record number. At this time, the CPU 11 uses the designated record as a current record.

When a record is specified by the file ID and the record number designated in the received command, the CPU 11 reads record data of the specified record (step S149). When the designated record data is read, the CPU 11 transmits response data including the read record data to the IC card processing apparatus 2 serving as a transmission source of the command (step S146).

When it is determined in step S143 that the backup data to the current record is not present (step S143, NO), the CPU 11 may shift to step S149 to perform a process of reading the record data to the current record. However, NO is determined in step S143 in the case in which, although a command which requests the backup data to be read is received, the backup data is not set in the record (current record) designated by the command. For this reason, the CPU 11 may shift to step S147 to transmit a response representing that the command is an error to the IC card processing apparatus 2 serving as a transmission source of the command.

When it is determined in the step S144 that all the backup data are read in advance (step S144, YES), the CPU 11 transmits a response representing that the command is an error to the IC card processing apparatus 2 serving as a transmission source of the command (step S147). This is a mechanism in which the IC card 1 notifies the IC card processing apparatus 2 that all the backup data to the current record are read in advance by an error notification.

When it is determined in the step S144 that all the backup data are read in advance (step S144, YES), the CPU 11, as indicated by a dotted line in FIG. 14, may shift to step S149 to read the record data of the current record. This is a mechanism which sequentially reads the backup data and the record data in the current record when a command (read record command which designates the current record) which requests the backup data to be read is given in succession. In this case, in the IC card processing apparatus 2, the read record command which designates the current record is given in succession to make it possible to perform control such that the backup data and the record data of the current record are sequentially read from the IC card 1.

In the reading process to the record file of the fourth configuration as described above, the record data of the record is read in response to a read command which designates a record number, and the backup data of the current record is read from the backup area in response to a read command (command which requests backup data to be read) which designates a current record. More specifically, when a read request which designates the current record is given subsequently to the reading of the record data, a plurality of backup data to the current record are designed to be sequentially read.

In this manner, the plurality of backup data to a specific record stored in the backup area can be read by a simple procedure. More specifically, according to the fourth configuration, in the IC card 1, even in a mode in which backup data is stored in a backup area, record data to be stored in the records and the plurality of backup data can be easily managed. As a result, in the IC card, for example, with respect to data such as transaction history information predicted to be updated, the latest data (record data), and data before update (backup data) can be easily managed by effectively using the memory area.

A fifth configuration of the record file will be described below.

The fifth configuration is a configuration of a record file in which record data and backup data are sequentially stored in a record area. In the record file of the fifth configuration, backup data is stored in an unused area in the record area. More specifically, in the fifth configuration, a backup data storage area for each record is not secured in advance, or a backup area is not arranged independently of the record area in the record file. More specifically, in the fifth configuration, an area to store backup data of a record need not be secured or defined in the record file. As a result, in the record file of the fifth configuration, the memory area can be efficiently used. In the fifth configuration, it is assumed that one backup data is stored for one record.

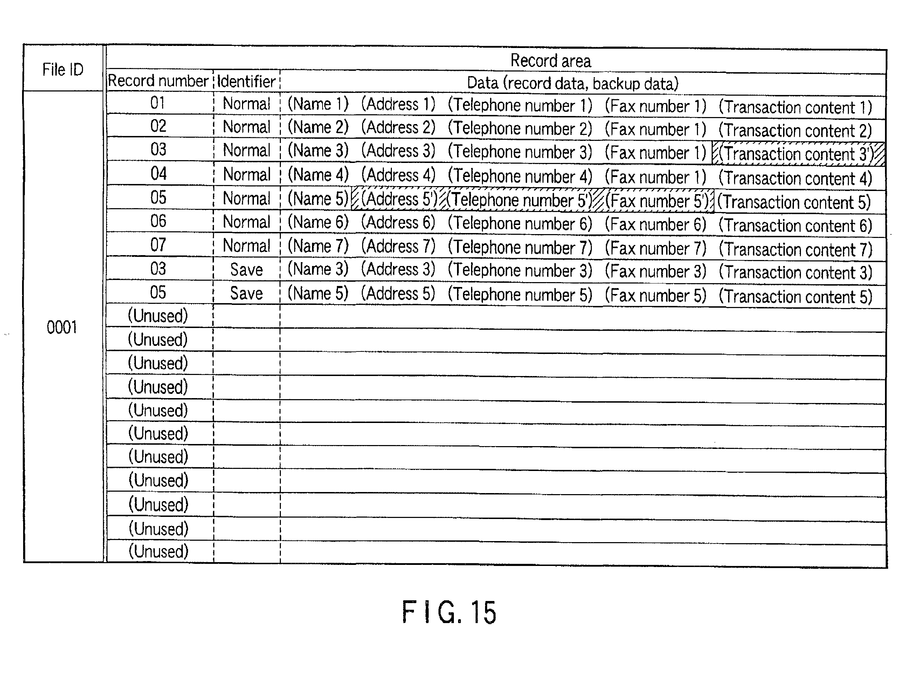

FIG. 15 is a diagram showing the fifth configuration of the record file.

The fifth configuration shown in FIG. 15 is a configuration of a fixed-length sequential record file. A record file of the fifth configuration shown in FIG. 15 is specified by a file ID. The record file specified by the file ID has a record area in which a plurality of records and a plurality of backup records are stored. Each of the records and the backup records stored in the record area is configured by a record number, an identifier, and a data body (record data or backup data). More specifically, for each of the records and each of the backup records, storage areas to store record numbers, identifiers, and data bodies are allocated.

The identifier is information representing whether a corresponding data body is record data or backup data. In the fifth configuration, it is assumed that one backup data corresponds to each of the records. For this reason, the identifier is information representing whether the corresponding data body is any one of record data and backup data. In the example shown in FIG. 15, when an identifier is "normal", a data body corresponding to the identifier is record data of a record indicated by a corresponding record number. In the example shown in FIG. 15, when the identifier is "save", a data body corresponding to the identifier is backup data (record data before update of the record) for a record indicated by the corresponding record number.

More specifically, in the example shown in FIG. 15, subsequently to "normal" record data in records having record numbers "01" to "07", backup data to the record having record number "03" and backup data to the record having record number "05" are stored. These backup data are identified by the fact that the identifiers are "save".

In the fifth configuration, when a certain record is to be updated, record data before update of the record is stored as backup data. The backup data is stored as a backup record in association with an identifier representing the record number and the "save". After the record data before update is stored as backup data (saved), the record data itself of the record is updated. In this manner, the latest record data is stored in the record area, and data obtained immediately before updating to the latest record data is performed is stored as backup data.

The record data of the records can be accessed by the file IDs and the record numbers. For example, in the example shown in FIG. 15, file ID "0001" and record number "01" are designated, whereby record data having record number "01" can be accessed. Similarly, record data having record number "03" (or "05") at which backup data is present can be accessed by designating file ID "0001" and record number "03" (or "05").

Backup data (record data before update) for each of the records can be accessed by a predetermined procedure. As a method of accessing the backup data, for example, a command which requests backup data to be accessed may be defined, or may be defined such that a backup data area is designated by a processing parameter in the command. On the basis of an order of receiving specific commands, the number of times of receiving the specific commands, and the like, the backup data may be accessed.

A case in which backup data of a current record is accessed by a command which designates a current record will be described below.

For example, the CPU 11 of the IC card 1 which receives a read request command (read record command) for data which designates file ID "0001" and record number "03" reads a data body having record number "03" and identifier "normal" as record data from the record area as shown in FIG. 15. At this time, in the IC card 1, the current record corresponds to the record having record number "03" in the record file having file ID "0001". The information representing the current record is stored in, for example, the working memory 13.

In this state, subsequently, when a read record command which designates the current record is received, the CPU 11 reads a data body having record number "03" and identifier "save (backup)" as backup data from the record area as shown in FIG. 15. It is assumed that the number of times of reading backup data by the read record command which designates the current record is stored in, for example, the working memory 13.

When the read record command which designates the current record is received twice in succession, the CPU 11 performs a process of processing the command as an error because the backup data is read in advance or performs a process of reading the record data of the record. In particular, in the former mode, the IC card processing apparatus 2 receives an error notification from the IC card 1 to make it possible to easily identify that the backup data in the record is read in advance. In the latter mode, the IC card processing apparatus 2 gives a read command which designates a current record to the IC card 1 in succession to make it possible to alternately read the record data in each record and the backup data.

A flow of a data rewriting process in the record file of the fifth configuration will be described.

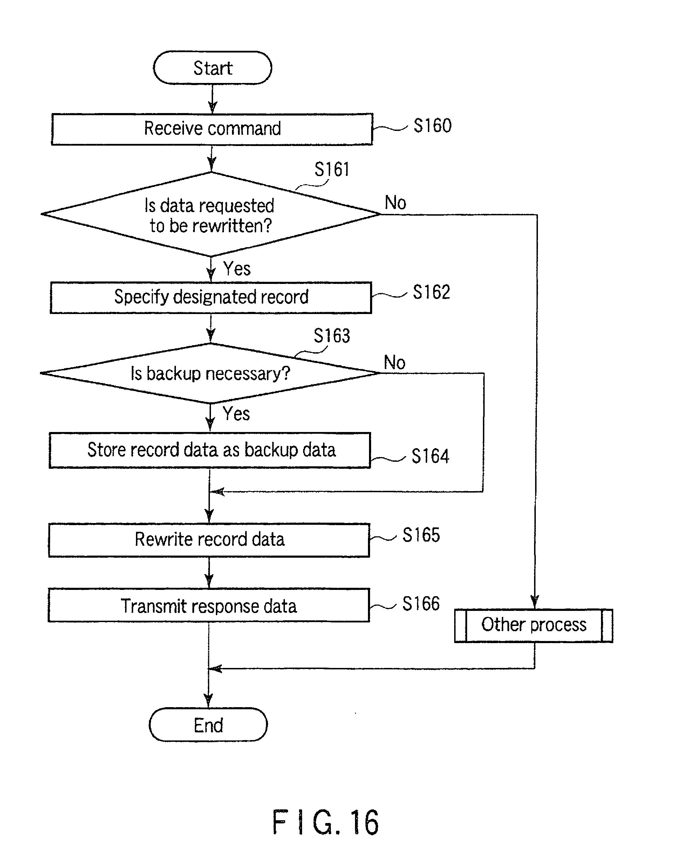

FIG. 16 is a flow chart for explaining a record rewriting process in the record file of the fifth configuration. The record rewriting process in the record file of the fifth configuration is the same as the record rewriting process in the record file of the third configuration described above, except the process of storing backup data. More specifically, steps S160 to S163 and steps S165 and S166 shown in FIG. 16 can be realized by the same procedures as in steps S110 to S113 and steps S115 and S116 shown in FIG. 10. For this reason, a detailed description of steps S160 to S163 and steps S165 and S166 shown in FIG. 16 will be omitted.

More specifically, it is assumed that the IC card 1 which holds the record file of the fifth configuration receives a rewrite command which requests record data rewriting process which requires backup from the IC card processing apparatus 2 (step S163, YES). In this case, the CPU 11 performs a process of storing record data before update of the record as backup data (step S164).

In the process in the step S164, the CPU 11 reads the record data (record data before update) of the record. When backup data to the record is not stored, the CPU 11 stores a backup record which associates the read record data with a record number and an identifier representing that data is backup data in an unused area in the record area. When the backup data to the record is stored in advance (more specifically, when backup data having the record number is present in advance), the CPU 11 overwrites the read record data on the backup data of the record number. In this manner, the record data before update is stored in the record area as the backup data of the record.

After the backup data is stored, the CPU 11 rewrites record data (data body in which a corresponding identifier is "normal") of a record designated by a received rewrite command with new record data (step S165). When the rewriting of the record data is normally ended, the CPU 11 transmits a response representing that the process to the received rewrite command is normally ended to the IC card processing apparatus 2 (step S166) to end the process. When the record data fails in the step S165, the CPU 11 may perform a recovering process to the record such that the record data before update stored as the backup data is written as record data of the record again.

As the process in the step S164, the CPU 11 may rewrite the identifier (information representing that data is normal record data) associated with the record data of the record with information representing that the data is backup. In this case, as the process in the step S165, the CPU 11 writes new record data in an unused area in the record area or an area in which the backup data to the existing record is stored. More specifically, the processes in the steps S164 and S165 can also be realized in such a manner that the record data before update is changed into backup data by rewriting the identifier to write new record data.

As described above, in the record data rewriting process to the record file of the fifth configuration, after the record data before update is stored in the unused area of the record area as backup data associated with the record number and the identifier representing that data is backup, the record data of the record is rewritten. In this manner, the record data rewriting process can be executed in a state that the record data before update is reliably stored (backup).

A data reading process to each of the records in the record file of the fifth configuration will be described below.

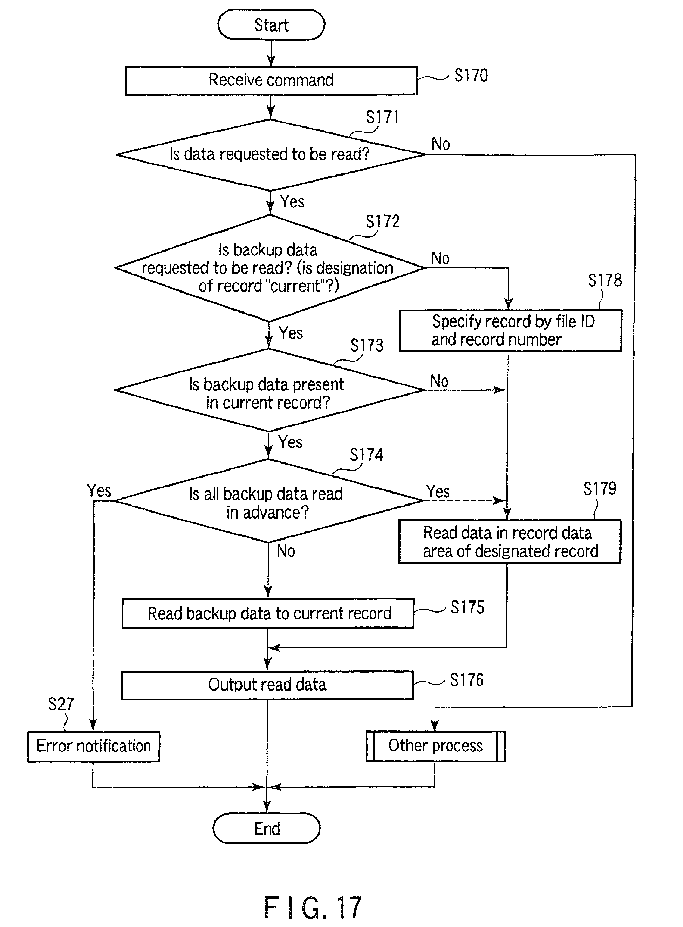

FIG. 17 is a flow chart for explaining the data reading process to the record in the record file of the fifth configuration. The data reading process to the record in the record file of the fifth configuration is the same as the data reading process to the record in the record file of the third configuration except that record data and backup data in a record area are specified by identifiers.

More specifically, when a read record command is received from the IC card processing apparatus 2 (step S171, YES), the CPU 11 determines whether the received read record command requests the backup data to be read (step S172). As methods of requesting the backup data to be read, the above-mentioned modes can be conceived. In this case, it is assumed that a request to read backup data is a read record command which designates a current record and that a request to read record data is a read record command which designates a record number. In this case, the CPU 11 determines whether the received read record command requests backup data to be read by checking whether the read record command designates a "current record".

When it is determined that the received command requests the backup data to be read (step S172, YES), the CPU 11 determines whether backup data to a present current record is present (step S173). This determination can be made by checking whether data having the same record number as that of the current record and the identifier representing that data is backup is present.

When it is determined that the backup data to the present current record is present (step S173, YES), the CPU 11 determines whether the backup data is read in advance as a process by a command immediately previous to the corresponding command (step S174). More specifically, the CPU 11 determines whether a command which requests backup data to be read is received in succession.

When it is determined that the backup data to the current record is not read in advance (step S174, NO), the CPU 11 reads the backup data to the current record (step S175). When the backup data to the current record is read, the CPU 11 transmits response data including the read data to the IC card processing apparatus 2 serving as a transmission source of the command (step S176). In this manner, by the processes in the steps S170 to S176, in the IC card 1, the backup data of the current record is read.

When the received command does not designate a current record, i.e., designation of a record is performed by a file ID and a record number (step S172, NO), the CPU 11 uses record data of a record specified by a file ID and a record number designated by the command as an object to be read (step S178). The CPU 11 reads the record data of the record specified by the file ID and the record number (step S179). The CPU 11 transmits response data including read record data to the IC card processing apparatus 2 serving as a transmission source of the command (step S176).

When it is determined that the backup data to the current record is not present (step S173, NO), the CPU 11 may shift to step S179 to read the record data of the current record. However, when "NO" is determined in step S173, the CPU 11 may shift to step S177 to transmit a response representing that the command is an error to the IC card processing apparatus 2 serving as a transmission source of the command.

When it is determined that the backup data are read by an immediately previous command in advance (step S174, YES), the CPU 11 transmits a response representing that the command is an error to the IC card processing apparatus 2 serving as a transmission source of the command (step S177). This is a device in which to prevent backup data to a current record from being read in succession.

When it is determined in the step S174 that the backup data is read in advance by an immediately previous command (step S174, YES), the CPU 11 may shift to step S179 to perform a process of reading the record data of the current record. In this case, when a read record command which designates the current record is given in succession, the CPU 11 alternately reads the backup data and the record data of the current record.

In the reading process to the record file of the fifth configuration as described above, the IC card 1 reads the record data of the record in response to a read command which designates a record number and reads the backup data to the record (current record) in response to a read command (command which requests backup data to be read) which designates a current record. In this manner, in the record file of the fifth configuration, a memory area can be efficiently used, and management of the record data and the backup data can be facilitated. As a result, in the IC card 1, for example, data such as transaction history information predicted to be updated can be efficiently stored and managed.

A sixth configuration of a record file will be described below.

The sixth configuration is a modification of the fifth configuration. The sixth configuration, like the fifth configuration, is a configuration of a record file in which record data and backup data are sequentially stored in a record area. In the record file of the sixth configuration, a plurality of backup data are stored for one record.

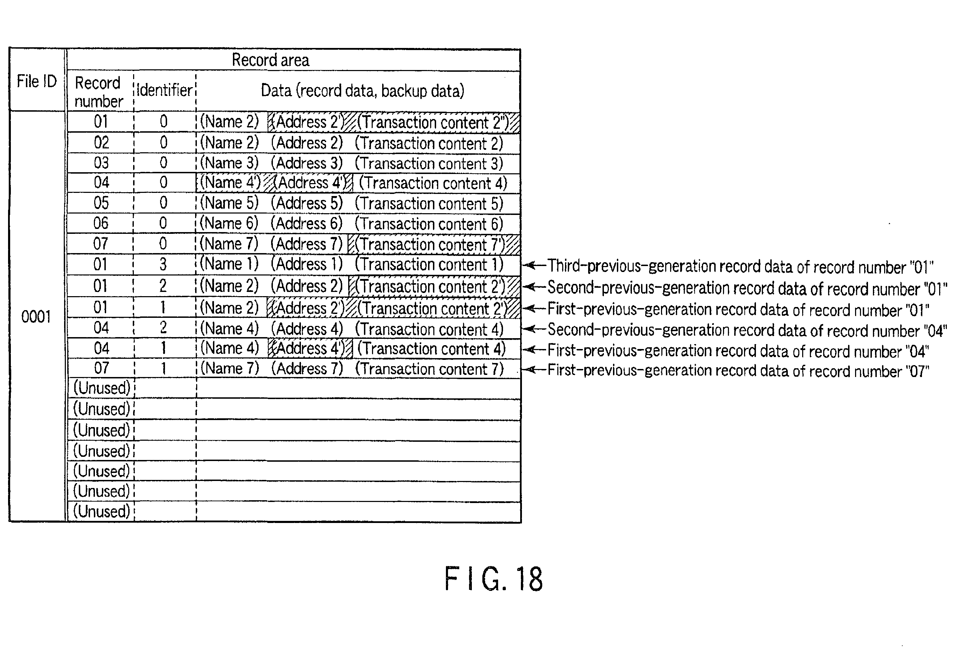

FIG. 18 is a diagram showing the sixth configuration of the record file.

The sixth configuration shown in FIG. 18 has the same configuration as that of the record file of the fifth configuration shown in FIG. 15. In the record file of the sixth configuration, it is assumed that a plurality of backup data are stored for one record. For this reason, in the record file of the sixth configuration shown in FIG. 18, identifiers corresponding to data bodies serving as the record data and the backup data are pieces of information representing generations of the data bodies, respectively.

For one record, it is assumed that a predetermined upper-limit number of backup data can be stored. For example, in this case, as in the fourth configuration, it is assumed that three backup data can be stored for one record. In this case, information representing states of four types may be used as the identifier. More specifically, information representing any one of record data and three backup data is used as the identifier.

In the example shown in FIG. 18, the identifier exhibits any one of "0", "1", "2", and "3". In the example shown in FIG. 18, it is assumed that identifier "0" represents that data is normal record data, that identifier "1" represents that data is first-previous-generation backup data, that identifier "2" represents that data is second-previous-generation backup data, and that identifier "3" represents that data is third-previous-generation backup data. According to these identifiers, a maximum of three backup data can be stored for each record, and a generation of each of the backup data can be indicated.

The example shown in FIG. 18 shows a state in which data shown in FIG. 12 are stored in the record file of the sixth configuration. The record file of the sixth configuration is different from the record file of the fourth configuration in that backup data is stored in a record area. For this reason, access control for record data and a plurality of backup data of each of the records in the record file of the sixth configuration is similar to the access control to the record file of the fourth configuration.

For example, a record rewriting process to the record file of the sixth configuration can be realized by the same procedures as those of the record rewriting process to the record file of the fourth configuration described with reference to FIG. 13 except that an area for storing backup data is in a record area. In the record rewriting process to the record file of the sixth configuration, not only backup data of the existing generations but also record data before update can be stored as first-previous-generation backup data by updating (incrementing) corresponding identifiers.

A data reading process to the record file of the sixth configuration can be realized by the same procedures as those of the data reading process to the record file of the fourth configuration described with reference to FIG. 14 except that record data and backup data of generations are identified by identifiers and read from a record area.

According to the record file of the sixth configuration described above, even in a mode in which a plurality of backup data are stored for one record, backup data storage areas need not be secured in advance for each record, or a backup area need not be arranged independently of a record area in the record file. More specifically, in the record file of the sixth configuration, even when a plurality of backup data are stored for one record, record data and a plurality of backup data for each record can be easily managed while efficiently using a memory area.

The updating processes and the reading processes to the record files of the first to sixth configurations can be variably modified.

Modifications of the embodiment described above will be described below.

As a first modification, a process of reading all backup data at once for each record will be described below.

More specifically, in the reading processes to the record files of the second, fourth, and sixth configurations, as shown in FIG. 8, 12, or 18, a plurality of backup data can be stored for one record data. For the record files, all the backup data may be desired to be read at once for each record. For example, backup data of a plurality of generations serving as history information may be efficiently operated by arranging a mechanism which can read the backup data at once.

In the explanations about the record files of the second, fourth, and sixth configurations, the process of sequentially reading backup data of a plurality of generations for each record has been described. In contrast to this, the process of reading data in all the backup data areas at once for each record can be realized by defining a parameter which requests all backup data to be read at once for a current record in, for example, a read record command. In this case, when the CPU 11 receives a command in which the parameter which designates all the backup data to be read at once for the current record is set, the CPU 11 reads all the backup data to the current record at once and outputs all the backup data read at once as response data.

An operation mode which need not sequentially read a plurality of backup data for each record may be employed. In the operation mode, a specification which always reads all backup data for each record may be used. More specifically, the IC card may read all backup data to a specific record (for example, a current record) in response to a command which requests backup data to be read.

As a second modification, a process of reading all backup data of all records in one record file at once will be described below.

In the record files of the first to sixth configurations, as an actual operation mode, a mode in which a plurality of data related to each other are stored as records may be frequently used. In this operation mode, a mechanism which can read all backup data (all backup data of all records) in one record file at once may be arranged to make it possible to perform an efficient operation.

In the explanations about the record files of the first to sixth configurations, the process of reading backup data to a specific record has been described. In contrast to this, the process of reading all backup data of all records in one record file at once can be realized by defining a parameter which designates all the backup data (all backup data of all records) in the record file to be read in, for example, a read command. In this case, when the CPU 11 receives a command in which the parameter that designates all the backup data in a specific record file (for example, a record file in a current state) to be read at once is set, the CPU 11 reads all the backup data in the record file at once and outputs all the backup data read at once as response data. In this manner, the IC card 1 can also realize the process of reading all the backup data to all the records in the file at once also for the record files of the first to sixth configurations.

As a third modification, a process in the case in which reading of record data fails due to data abnormality in a record data area will be described below.

As the record rewriting process, there has been described a recovering process which, after existing record data is stored as backup data, when rewriting of the record data fails, the data stored as the backup data is written as record data again. As in the process, also in the record data reading process, when the record data cannot be read due to data abnormality such as memory abnormality, the record data can be recovered by the latest backup data (data immediately before previous update) to the record data.

For example, in the processes in step S29 in FIG. 5, step S49 in FIG. 8, step S129 in FIG. 11, step S149 in FIG. 14, or step S179 in FIG. 17, when reading of record data fails due to data abnormality, the CPU 11 of the IC card 1 may write the latest backup data as record data. In this case, the CPU 11 may give an error notification as a result of the reading process or may output data written in the record data.

The record data recovering process as described above may be executed according to a command which requests recovery from the IC card processing apparatus 2. More specifically, when reading fails due to data abnormality in the record data area in response to the command which requests the record data to be read from the IC card processing apparatus 2, the IC card 1 outputs a response representing that the record data is abnormal together with an error notification. Thereafter, when the IC card 1 receives a command which requests the record data to be recovered from the IC card processing apparatus 2, the IC card 1 executes the record data recovering process. In other words, when the IC card processing apparatus 2 receives an error notification representing that reading of the record data fails due to data abnormality from the IC card 1, the IC card processing apparatus 2 gives a command which requests the record data to be recovered to the IC card 1 to make it possible to recover the abnormal record data.

When the IC card 1 finds data abnormality of the record data in the reading process, in place of reading the record data, the latest backup data (record data immediately before update) to the record data may be read. In this case, the IC card 1 notifies that the latest backup data is read in place of record data together with the read data. In this manner, even when a record data area cannot be used due to memory abnormality or the like, the IC card 1 can notify that the record data is abnormal to make it possible to output (use) the backup data in place of the record data.

The IC card 1 according to the embodiment has the data memory 14 which stores a record file that stores a plurality of record data. When a command which requests specific record data to be rewritten in a record file is given from the external apparatus 2, record data before the record data required to be rewritten is rewritten is stored in the record file as backup data. When the record data before the rewriting is stored as backup data, the record data is rewritten according to the command.

As a result, the IC card 1 which can easily store the latest record data and record data of a plurality of generations before update and can read the record data by a simple procedure while efficiently using a storage area of the data memory 14 can be provided.

## Claims

1. An IC card (1) which performs a process according to a command given by an external apparatus (2), comprising:
a storage unit (14) configured to store a record file, the record file having a record area which stores record data and a data saving area which stores backup data to the record data stored in the record area;
a data saving process unit (S14, S36, S114, S134 to S136, S164) configured to store the record data stored in the record area as backup data in the data saving area, in the case where a command which requests the record data in the record file to be rewritten is given from the external apparatus;
a rewriting process unit (S15, S37, S115, S137, S165) configured to rewrite the record data stored in the record area after the data saving process unit stores the backup data in the data saving area.

2. The apparatus according to claim 1, **characterized in that** the record file is a data file of a format which sequentially stores a plurality of record data in a record area,
the data saving process unit (S164) is configured to store the record data before rewriting as backup data in an unused area of the record area in the record file, in the case where a command which requests the record data in the record file to be rewritten is given from the external apparatus, and
the rewriting process unit (S165) is configured to rewrite the record data stored in the record area of the record file, after the record data before rewriting is stored as backup data by the data saving process unit.

3. The apparatus according to any one of claims 1 to 2, **characterized in that** the data saving process unit (S136) is configured to add generation information representing an order of saving to each of the backup data and stores the backup data.

4. The apparatus according to any one of claims 1 to 3, **characterized by** further comprising:
a reading process unit (S25, S45, S125, 5145, S175) which is configured to read backup data to the record data designated by the command, in the case where a command which requests backup data to the record data in the record file to be read is given from the external apparatus.

5. The apparatus according to claim 3, **characterized in that** the data saving process unit (S135) is configured to delete the oldest backup data specified by the generation information added to each of the backup data, in the case where existing backup data is deleted with storage of the backup data to the record data.

6. The apparatus according to claim 3, **characterized in that** the data saving process unit (S134 to S135) is configured to delete the oldest backup data of the backup data to the record data, in the case where the number of existing backup data to the record data to be stored as backup data reaches an upper limit.

7. The apparatus according to claim 4, **characterized in that** the reading process unit (S145) is configured to sequentially read the backup data corresponding to the record data according to the information representing the order of saving, in the case where a command which requests backup data to specific record data in the record file to be read is given from the external apparatus in succession.

8. The apparatus according to claim 4, **characterized in that** the reading process unit (145) is configured to read all the backup data corresponding to the record data, in the case where a command which requests all backup data to specific record data in the record file to be read is given from the external apparatus.

9. The apparatus according to claim 4, **characterized in that** the reading process unit (S145) is configured to read all the backup data stored in the record file, in the case where a command which requests all the backup data in the record file to be read is given from the external apparatus.

10. The apparatus according to any one of claims 1 to 2, **characterized in that** the rewriting process unit (S15, S37, S115, S137, S165) is configured to perform a recovering process which writes the backup data stored by the data saving process unit as the record data, in the case where rewriting of the record data fails.

11. The apparatus according to claim 4, **characterized in that** the reading process unit (S25, S45, S125, S145, S175) is configured to perform a recovering process which writes the backup data to the record data as the record data, in the case where reading of the record data fails.

12. The apparatus according to claim 4, **characterized in that** the reading process unit (S25, S45, S125, S145, S175) is configured to perform a backup process which reads the backup data to the record data as the record data, in the case where reading of the record data fails.

13. The apparatus according to claim 12,
**characterized in that** the backup process outputs a response representing that the backup data is read in place of the record data because reading of the record data is abnormal together with the read backup data, in the case where backup data to the record data is read in place of the record data.

14. A data management method in an IC card (1), the method comprising:
storing, in a storage unit (14), a record file having a record area which stores record data and a data saving area which stores backup data to the record data stored in the record area;
storing (S14, S36, S114, S134 to S136, S164) the record data stored in the record area as backup data in the data saving area, in the case where a command which requests the record data in the record file to be rewritten is given from an external apparatus (2); and
rewriting (S15, S37, S115, S137, S165) the record data stored in the record area after the backup data is stored in the data saving area.

## Patentansprüche

1. IC-Karte (1), die einen Prozess gemäß einer Anweisung durchführt, die durch eine externe Vorrichtung (2) vorgegeben wird, mit:
einer Speichereinheit (14), die konfiguriert ist zum Speichern einer Aufzeichnungsdatei, wobei die Aufzeichnungsdatei einen Aufzeichnungsbereich aufweist, der Aufzeichnungsdaten speichert, und einen Datenspeicherbereich, der Backup-Daten zu den Aufzeichnungsdaten speichert, die in dem Aufzeichnungsbereich gespeichert sind;
eine Datenspeicher-Verarbeitungseinheit (S14, S36, S114, S134 bis S16, S164), die konfiguriert ist zum Speichern der Aufzeichnungsdaten, die in dem Aufzeichnungsbereich gespeichert sind, als Backup-Daten in dem Datenspeicherbereich, in dem Fall, wenn eine Anweisung, die ein Neuschreiben der Aufzeichnungsdaten in der Aufzeichnungsdatei anfordert, von der externen Vorrichtung vorgegeben wird;
eine Neuschreibverarbeitungseinheit (S15, S37, S115, S137, S165), die konfiguriert ist zum Neuschreiben der Aufzeichnungsdaten, die in dem Aufzeichnungsbereich gespeichert sind, nachdem die Datenspeicher-Verarbeitungseinheit die Backup-Daten in dem Datenspeicherbereich speichert.

2. Vorrichtung nach Anspruch 1, **dadurch gekennzeichnet, dass** die Aufzeichnungsdatei eine Datendatei eines Formats ist, die eine Vielzahl von Aufzeichnungsdaten in einem Aufzeichnungsbereich sequentiell speichert,
die Datenspeicher-Verarbeitungseinheit (S164) konfiguriert ist zum Speichern der Aufzeichnungsdaten vor einem Neuschreiben als Backup-Daten, in einem ungenutzten Bereich des Aufzeichnungsbereichs in der Aufzeichnungsdatei, in dem Fall, wenn eine Anweisung, die ein Neuschreiben der Aufzeichnungsdaten in der Aufzeichnungsdatei anfordert, von der externen Vorrichtung vorgegeben wird, und
die Neuschreibverarbeitungseinheit (S165) konfiguriert ist zum Neuschreiben der Aufzeichnungsdaten, die in dem Aufzeichnungsbereich der Aufzeichnungsdatei gespeichert sind, nachdem die Aufzeichnungsdaten vor dem Neuschreiben als Backup-Daten durch die Datenspeicher-Verarbeitungseinheit gespeichert werden.

3. Vorrichtung nach irgendeinem der Ansprüche 1 bis 2, **dadurch gekennzeichnet, dass** die Datenspeicher-Verarbeitungseinheit (S136) konfiguriert ist zum Hinzufügen einer Erzeugungsinformation, die eine Reihenfolge des Speicherns für alle die Backup-Daten darstellt, und die Backup-Daten speichert.

4. Vorrichtung nach irgendeinem der Ansprüche 1 bis 3, ferner **gekennzeichnet durch**:
eine Leseverarbeitungseinheit (S25, S45, S125, S145, S175), die konfiguriert ist zum Lesen von Backup-Daten zu den Aufzeichnungsdaten, die **durch** die Anweisung bestimmt sind, in dem Fall, wenn eine Anweisung, die ein Lesen von Backup-Daten zu den Aufzeichnungsdaten in der Aufzeichnungsdatei anfordert, von der externen Vorrichtung vorgegeben wird.

5. Vorrichtung nach Anspruch 3, **dadurch gekennzeichnet, dass** die Datenspeicher-Verarbeitungseinheit (S135) konfiguriert ist zum Löschen der ältesten Backup-Daten, die durch die Erzeugungsdaten spezifiziert sind, welche allen Backup-Daten hinzugefügt sind, in dem Fall, wenn existierende Backup-Daten mit einem Speichern der Backup-Daten für die Aufzeichnungsdaten gelöscht werden.

6. Vorrichtung nach Anspruch 3, **dadurch gekennzeichnet, dass** die Datenspeicher-Verarbeitungseinheit (S134 bis S135) konfiguriert ist zum Löschen der ältesten Backup-Daten der Backup-Daten für die Aufzeichnungsdaten, in dem Fall, wenn die Anzahl existierender Backup-Daten für die Aufzeichnungsdaten, die als Backup-Daten gespeichert werden sollen, einen oberen Grenzwert erreicht.

7. Vorrichtung nach Anspruch 4, **dadurch gekennzeichnet, dass** die Leseverarbeitungseinheit (S145) konfiguriert ist zum sequentiellen Lesen der Backup-Daten, die mit den Aufzeichnungsdaten zusammenhängen, gemäß der Information, die die Reihenfolge des Speicherns darstellt, in dem Fall, wenn eine Anweisung, die ein Lesen von Backup-Daten für die spezifizierten Aufzeichnungsdaten in der Aufzeichnungsdatei anfordert, von der externen Vorrichtung hintereinander vorgegeben wird.

8. Vorrichtung nach Anspruch 4, **dadurch gekennzeichnet, dass** die Leseverarbeitungseinheit (145) konfiguriert ist zum Lesen aller Backup-Daten, die mit den Aufzeichnungsdaten zusammenhängen, in dem Fall, wenn eine Anweisung, die ein Lesen aller Backup-Daten für die spezifizierten Aufzeichnungsdaten in der Aufzeichnungsdatei anfordert, von der externen Vorrichtung vorgegeben wird.

9. Vorrichtung nach Anspruch 4, **dadurch gekennzeichnet, dass** die Leseverarbeitungseinheit (S145) konfiguriert ist zum Lesen aller Backup-Daten, die in der Aufzeichnungsdatei gespeichert sind, in dem Fall, wenn eine Anweisung, die ein Lesen aller Backup-Daten in der Aufzeichnungsdatei anfordert, von der externen Vorrichtung vorgegeben wird.

10. Vorrichtung nach irgendeinem der Ansprüche 1 bis 2, **dadurch gekennzeichnet, dass** die Neuschreibverarbeitungseinheit (S15, S37, S115, S137, S165) konfiguriert ist zum Durchführen eines Wiederherstellungsprozesses, der die Backup-Daten, die durch die Datenspeicher-Verarbeitungseinheit als Aufzeichnungsdaten gespeichert sind, schreibt, in dem Fall, wenn ein Neuschreiben der Aufzeichnungsdaten fehlschlägt.

11. Vorrichtung nach Anspruch 4, **dadurch gekennzeichnet, dass** die Leseverarbeitungseinheit (S25, S45, S125, S145, S175) konfiguriert ist zum Durchführen eines Wiederherstellungsprozesses, der die Backup-Daten für die Aufzeichnungsdaten als die Aufzeichnungsdaten schreibt, in dem Fall, wenn das Schreiben der Aufzeichnungsdaten fehlschlägt.

12. Vorrichtung nach Anspruch 4, **dadurch gekennzeichnet, dass** die Leseverarbeitungseinheit (S25, S45, S125, S145, S175) konfiguriert ist zum Durchführen eines Backup-Prozesses, der die Backup-Daten für die Aufzeichnungsdaten als die Aufzeichnungsdaten liest, in dem Fall, wenn das Lesen der Aufzeichnungsdaten fehlschlägt.

13. Vorrichtung nach Anspruch 12, **dadurch gekennzeichnet, dass** der Backup-Prozess eine Antwort ausgibt, die darstellt, dass die Backup-Daten anstelle der Aufzeichnungsdaten gelesen wurden, da ein Lesen der Aufzeichnungsdaten zusammen mit den gelesenen Backup-Daten anomal ist, in dem Fall, wenn die Backup-Daten für die Aufzeichnungsdaten anstelle der Aufzeichnungsdaten gelesen werden.

14. Datenverwaltungsverfahren in einer IC-Karte (1), wobei das Verfahren umfasst:
Speichern, in einer Speichereinheit (14), einer Aufzeichnungsdatei mit einem Aufzeichnungsbereich, der Aufzeichnungsdaten speichert, und einen Datenspeicherbereich, der Backup-Daten für die Aufzeichnungsdaten speichert, die in dem Aufzeichnungsbereich gespeichert sind;
Speichern (S14, S36, S114, S134 bis S136, S164) der Aufzeichnungsdaten, die in dem Aufzeichnungsbereich gespeichert sind, als Backup-Daten in dem Datenspeicherbereich, in dem Fall, wenn eine Anweisung, die ein Neuschreiben der Aufzeichnungsdaten in der Aufzeichnungsdatei anfordert, von der externen Vorrichtung (2) vorgegeben wird; und
Neuschreiben (S15, S37, S115, S137, S165) der Aufzeichnungsdaten, die in dem Aufzeichnungsbereich gespeichert sind, nachdem die Backup-Daten in dem Datenspeicherbereich gespeichert sind.

## Revendications

1. Carte à circuit intégré (1) qui effectue un traitement conformément à une commande donnée par un appareil externe (2), comprenant :
une unité de mémorisation (14) configurée pour mémoriser un fichier d'enregistrement, le fichier d'enregistrement comportant une zone d'enregistrement qui mémorise des données d'enregistrement et une zone de sauvegarde de données qui mémorise des données de sauvegarde pour les données d'enregistrement mémorisées dans la zone d'enregistrement ;
une unité de traitement de sauvegarde de données (S14, S36, S114, S134 à S136, S164) configurée pour mémoriser les données d'enregistrement mémorisées dans la zone d'enregistrement en tant que données de sauvegarde dans la zone de sauvegarde de données, dans le cas où une commande qui demande que les données d'enregistrement dans le fichier d'enregistrement soient réécrites est donnée par l'appareil externe ;
une unité de traitement de réécriture (S15, S37, S115, S137, S165) configurée pour réécrire les données d'enregistrement mémorisées dans la zone d'enregistrement après que l'unité de traitement de sauvegarde de données a mémorisé les données de sauvegarde dans la zone de sauvegarde de données.

2. Appareil selon la revendication 1, **caractérisé en ce que** le fichier d'enregistrement est un fichier de données d'un format qui mémorise séquentiellement une pluralité de données d'enregistrement dans une zone d'enregistrement,
l'unité de traitement de sauvegarde de données (S164) est configurée pour mémoriser les données d'enregistrement avant réécriture en tant que données de sauvegarde dans une zone inutilisée de la zone d'enregistrement dans le fichier d'enregistrement, dans le cas où une commande qui demande que les données d'enregistrement dans le fichier d'enregistrement soient réécrites est donnée par l'appareil externe, et
l'unité de traitement de réécriture (S165) est configurée pour réécrire les données d'enregistrement mémorisées dans la zone d'enregistrement du ficher d'enregistrement, après que les données d'enregistrement avant réécriture ont été mémorisées en tant que données de sauvegarde par l'unité de traitement de sauvegarde de données.

3. Appareil selon l'une quelconque des revendications 1 et 2, **caractérisé en ce que** l'unité de traitement de sauvegarde de données (S136) est configurée pour ajouter des informations de génération représentant un ordre de sauvegarde à chacune des données de sauvegarde et mémorise les données de sauvegarde.

4. Appareil selon l'une quelconque des revendications 1 à 3, **caractérisé en ce qu'**il comprend en outre :
une unité de traitement de lecture (S25, S45, S125, S145, S175) qui est configurée pour lire les données de sauvegarde pour les données d'enregistrement désignées par la commande, dans le cas où une commande qui demande que les données de sauvegarde pour les données d'enregistrement dans le fichier d'enregistrement soient lues est donnée par l'appareil externe.

5. Appareil selon la revendication 3, **caractérisé en ce que** l'unité de traitement de sauvegarde de données (S135) est configurée pour effacer les données de sauvegarde les plus anciennes spécifiées par les informations de génération ajoutées à chacune des données de sauvegarde, dans le cas où des données de sauvegarde existantes sont effacées par la mémorisation des données de sauvegarde pour les données d'enregistrement.

6. Appareil selon la revendication 3, **caractérisé en ce que** l'unité de traitement de sauvegarde de données (S134 à S135) est configurée pour effacer les données de sauvegarde les plus anciennes des données de sauvegarde pour les données d'enregistrement, dans le cas où le nombre de données de sauvegarde existantes pour les données d'enregistrement à mémoriser en tant que données de sauvegarde atteint une limite supérieure.

7. Appareil selon la revendication 4, **caractérisé en ce que** l'unité de traitement de lecture (S145) est configurée pour lire séquentiellement les données de sauvegarde correspondant aux données d'enregistrement conformément aux informations représentant l'ordre de sauvegarde, dans le cas où une commande qui demande que des données de sauvegarde pour des données d'enregistrement spécifiques dans le fichier d'enregistrement soient lues est donnée par l'appareil externe successivement.

8. Appareil selon la revendication 4, **caractérisé en ce que** l'unité de traitement de lecture (145) est configurée pour lire toutes les données de sauvegarde correspondant aux données d'enregistrement, dans le cas où une commande qui demande que toutes les données de sauvegarde pour des données d'enregistrement spécifiques dans le fichier d'enregistrement soient lues est donnée par l'appareil externe.

9. Appareil selon la revendication 4, **caractérisé en ce que** l'unité de traitement de lecture (S145) est configurée pour lire toutes les données de sauvegarde mémorisées dans le fichier d'enregistrement, dans le cas où une commande qui demande que toutes les données de sauvegarde dans le fichier d'enregistrement soient lues est donnée par l'appareil externe.

10. Appareil selon l'une quelconque des revendications 1 et 2, **caractérisé en ce que** l'unité de traitement de réécriture (S15, S37, S115, S137, S165) est configurée pour effectuer un traitement de récupération qui écrit les données de sauvegarde mémorisées par l'unité de traitement de sauvegarde de données en tant que données d'enregistrement, dans le cas où la réécriture des données d'enregistrement échoue.

11. Appareil selon la revendication 4, **caractérisé en ce que** l'unité de traitement de lecture (S25, S45, S125, S145, S175) est configurée pour effectuer un traitement de récupération qui écrit les données de sauvegarde pour les données d'enregistrement en tant que données d'enregistrement, dans le cas où la lecture des données d'enregistrement échoue.

12. Appareil selon la revendication 4, **caractérisé en ce que** l'unité de traitement de lecture (S25, S45, S125, S145, S175) est configurée pour effectuer un traitement de sauvegarde qui lit les données de sauvegarde pour les données d'enregistrement en tant que données d'enregistrement, dans le cas où la lecture des données d'enregistrement échoue.

13. Appareil selon la revendication 12,
**caractérisé en ce que** traitement de sauvegarde délivre une réponse montrant que les données de sauvegarde sont lues à la place des données d'enregistrement parce que la lecture des données d'enregistrement est anormale avec les données de sauvegarde lues, dans le cas où les données de sauvegarde pour les données d'enregistrement sont lues à la place des données d'enregistrement.

14. Procédé de gestion de données dans une carte à circuit intégré (1), le procédé consistant à :
mémoriser, dans une unité de mémorisation (14), un fichier d'enregistrement comportant une zone d'enregistrement qui mémorise des données d'enregistrement et une zone de sauvegarde de données qui mémorise des données de sauvegarde pour les données d'enregistrement mémorisées dans la zone d'enregistrement ;
mémoriser (S14, S36, S114, S134 à S136, S164) les données d'enregistrement mémorisées dans la zone d'enregistrement en tant que données de sauvegarde dans la zone de sauvegarde de données, dans le cas où une commande qui demande que les données d'enregistrement dans le fichier d'enregistrement soient réécrites est donnée par un appareil externe (2) ; et
réécrire (S15, S37, S115, S137, S165) les données d'enregistrement mémorisées dans la zone d'enregistrement après que les données de sauvegarde ont été mémorisées dans la zone de sauvegarde de données.
